# EUROPÄISCHE PATENTANMELDUNG

(11) **EP 4 814 356 A2**
(43) Veröffentlichungstag der Anmeldung: **30.09.2026**
(21) Anmeldenummer: 26167131.7
(22) Anmeldetag: 24.03.2026
(51) Int. Cl.: F16L 1/036, H02G 9/06

(54) **EINBAU VON ROHRSTRÄNGEN IM BODEN, INNENBALLAST, BREMSE, ROHRINSTALLATIONSVORRICHTUNG**

(30) Priorität: 24.03.2025 DE 102025111201
(71) Anmelder: Bohlen & Doyen Bau GmbH, 26639 Wiesmoor (DE)
(72) Erfinder: Krögel, Dr. Frank, 26639 Wiesmoor (DE); Hebig, Aaron, 26639 Wiesmoor (DE); Scheffler, Lutz, 26639 Wiesmoor (DE); Kroon, Albert, 26639 Wiesmoor (DE)
(74) Vertreter: Eisenführ Speiser

(57) **Zusammenfassung**

Die Erfindung betrifft das Gebiet des Einbaus von Rohren im Boden. Vorgeschlagen werden ein Verfahren zum Einbau eines oder mehrerer Rohrstränge im Boden, wobei Innenballaste eingebracht werden, wobei eine längenbezogene Masse des jeweiligen Innenballasts auf Grundlage eines bei einem Einbau des Rohrstrangs auftretenden und zu kompensierenden längenbezogenen Auftriebs des Rohrstrangs bestimmt ist, wobei mehrere Innenballaste mittels ihrer Bewegungseinheiten durch den Rohrstrang bzw. die Rohrstränge bewegt werden, wobei die Innenballaste aus einem Abschnitt des Rohrstrangs bzw. aus Abschnitten der Rohrstränge durch die Bewegung entfernt werden, für den bzw. die eine Auftriebskompensation nicht mehr benötigt wird oder der bzw. die keinen Auftrieb mehr erfahren, und ein Innenballast mit einem Ballast-Körper und einer Bewegungseinheit, die für eine Beweglichkeit des Ballast-Körpers zumindest in Längsrichtung des Rohrstrangs ausgestaltet ist. Vorgeschlagen werden auch eine Bremse für einen in einem Rohrstrang aufzunehmenden Innenballast sowie eine Rohrinstallationsvorrichtung zur parallelen Verbindung mehrerer Rohre mit parallelen Rohrsträngen mittels Steckmuffen.

## Beschreibung

Die vorliegende Erfindung betrifft das Gebiet des Einbaus von Rohren im Boden, insbesondere unter Verwendung von zeitweise fließfähigem, selbst verdichtenden Verfüllbaustoff.

Bei bekannten Ansätzen im Leitungsbau werden Rohre unterirdisch beispielsweise in sogenannte Bettungszonen gelegt. Diese Bettungszonen bestehen in der Regel aus einem Sandgemisch und dienen dazu, den Rohren eine sichere und setzungsfeste Auflage zu geben. Ferner ist vorgesehen, dass das umgebende Sandmaterial so beschaffen ist, dass die Rohre geschützt sind und keine Beschädigungen erfahren.

In den letzten Jahren werden Rohre, Leitungen und Kabel zunehmend in sogenanntem Flüssigboden bzw. zeitweise fließfähigem selbst verdichtenden Verfüllbaustoff (ZFSV) verlegt. Dies hat den Vorteil, dass der Flüssigboden bzw. fließfähige Verfüllbaustoff sich aufgrund seiner Fließfähigkeit optimal um den Leitungskörper legen kann. Sowohl Hohlräume als auch Zwischenräume zwischen dem Bettungsmaterial und dem Rohr werden dadurch vermieden. Ferner können dem Flüssigboden oder ZFSV auch spezielle Komponenten zugemischt werden, die beispielsweise einer erhöhten Wärmeleitfähigkeit dienen. Soweit im Folgenden vereinfacht auf ZFSV Bezug genommen wird, ist zu verstehen, dass dies lediglich beispielhaft für auch andere vergleichbare Ansätze gemeint ist, auch wenn diese Ansätze nicht im möglicherweise streng verstandenen Sinne von "zeitweise fließfähigem selbst verdichtenden Verfüllbaustoff" Gebrauch machen, soweit dieser Begriff als Bezeichnung für eine konkrete Ausgestaltung eines allgemeineren fließfähigen Mediums oder einer anderen vergleichbaren Umgebung zu sehen wäre.

Die Möglichkeit einer verbesserten Wämeabfuhr wiederum macht ZFSV besonders als Bettungsmaterial für im Erdboden verlegte Stromkabel interessant. Die im Hoch- und Höchstspannungsbereich verlegten Kabel erzeugen durch ihre hohe Übertragungsleistungen Temperaturen von bisweilen mehr als 80°C. Die von den Kabeln erzeugte Wärme muss abgeleitet werden, um die Übertragungskapazität nicht zu verschlechtern. Der ZFSV ist hierzu hervorragend geeignet und wird daher besonders bei langen Erdkabeltrassen der Übertragungsnetze eingesetzt.

Nun werden aus verschiedenen Betriebsgründen die Stromkabel selbst meist in vorab verlegte Schutzrohre eingezogen. Diese Schutzrohre bestehen in der Regel aus Polyethylen (PE). Solche PE-Rohre sind bei ihrer Verlegung noch leer und erzeugen somit im flüssigen Medium ZFSV erhebliche Auftriebskräfte. Das Leerrohr wird daher mit einer Auftriebssicherung versehen werden, damit es während der flüssigen Phase des ZFSV in der gewünschten Tiefe unter der Geländeoberfläche verbleibt und nicht im noch flüssigen ZFSV auftreibt.

Der Auftrieb von Rohrleitungen bei der dauerhaften Verlegung in flüssigen Medien bzw. einer fließfähigen Umgebung wird bisher vornehmlich auf zwei Arten verhindert.

Zum einen werden die Rohre von außen mit einer Ballastierung beschwert, um damit ein Eigengewicht einer Kombination von Rohr und Ballastierung im fließfähigen Medium zu erhöhen. Dies geschieht typischerweise in Form von Betonelementen oder auch Stahlkonstruktionen, die in den erforderlichen Abständen auf die Rohre gesetzt werden.

Eine zweite Möglichkeit sind Auftriebssicherungen aus Metallschellen oder Kunststoffbändern, die um die Rohre gelegt und dann mit Erdankern im Boden fixiert werden, um die Auftriebskräfte aufzunehmen.

Beide Verfahren sind aufwändig und erhöhen aufgrund ihrer Materialbeschaffenheit und Anordnung am Rohr das Risiko einer Rohrbeschädigung erheblich.

Verbleiden die Auftriebssicherungen nach dem Einbau des Rohres an Ort und Stelle, stellen Sie einen zusätzlichen Kostenfaktor dar. Hinzu kommt hierbei noch, dass sich dabei gewissermaßen eine Störung der Durchgängigkeit der Rohrbettung ergibt. Das Rohr ist nämlich durch diese Methodik nicht mehr durchgängig vom Bettungsmaterial umgeben, sondern erhält in regelmäßigen Abständen Kontakt zu Beton bzw. Stahl und Kunststoff.

Um diese Problematik zu umgehen, ist es aktuell beim Einbau von Flüssigboden gängige Praxis, Ballastierungselemente zu verwenden, die nach dem Aushärten des ZFSV entfernt werden. Dies wiederum hat den erheblichen Nachteil, dass ein gewisser Zeitraum vergangen sein muss, bevor die Teile entfernt werden können. Dadurch verzögert sich der Bauablauf erheblich. Der Zeitpunkt der Entnahme der Ballastierungselemente muss zudem exakt abgestimmt werden, da ein zu frühes Entfernen der Ballastierung vor der ausreichenden Erhärtung des ZFSV aufgrund der dann noch vorherrschenden Auftriebskräfte zu einem Aufschwimmen der Schutzrohre führen würde. Wird die Ballastierung erst nach dem entsprechenden Aushärten des Flüssigbodens entfernt, entstehen entsprechend Löcher und Hohlräume an diesen Stellen. Diese müssen in einem anschließenden Arbeitsgang nachträglich verfüllt werden. Das Warten auf den Verfestigungsprozess sorgt ebenso wie dieses zusätzliche Nacharbeiten für eine deutliche Verzögerung im Bauablauf. Außerdem ist noch zu erwähnen, dass bei Verwendung von fließfähigen Baustoffen, die eine hohe Endfestigkeit wie z.B. Beton besitzen, ein Entfernen der Elemente nur mit sehr großem Aufwand oder gar nicht möglich ist.

Bei einer bautechnisch bedingten temporären Ballastierung werden Leerrohre bei bekannten Ansätzen mit Wasser gefüllt, wobei die Wasserfüllung gemeinsam mit dem Gewicht des Rohres den Abtrieb bzw. die Lagestabilität sicherstellen sollen, was aber gemäß dem Archimedischen Prinzip nur soweit funktioniert, wie die Dichte des das Rohr umgebenden Mediums kleiner oder allenfalls geringfügig größer ist als die Dichte der Kombination von Rohr und Wasserfüllung. Die Dichte von PE und Wasser liegen mit grob 1 Tonne pro m³ nahe beieinander. Demgegenüber liegt die Dichte von ZFSV im Bereich von 2 Tonnen pro m³, so dass selbst ein vollständig mit Wasser gefülltes PE-Rohr noch immer "aufschwimmen" würde.

Ein einem Aspekt der vorliegenden Erfindung zugrundeliegendes Ziel ist es, eine kosteneffiziente Möglichkeit zum Einbau von einem oder mehreren Rohrsträngen im Boden bereitzustellen, bei der die bekannten Risiken einer Rohrbeschädigung und einer gestörten Durchgängigkeit der Rohrbettung vermieden oder zumindest verringert werden. Hierbei ist es zudem wünschenswert, Komplexitäten etwa hinsichtlich eines Timings mit Blick auf den zeitweise fließfähigen Verfüllbaustoff zu vermeiden.

Es ist daher gewünscht, eine Lösung vorzustellen, die mit geringem Risiko einer Rohr(strang)beschädigung ohne Verschwendung von Material und/oder Arbeitskraft und ohne übermäßige Anforderungen an den Verfahrensablauf einen Einbau eines oder mehrerer Rohrstränge im Boden erlaubt.

Erfindungsgemäß wird nach einem ersten Aspekt ein Verfahren zum Einbau eines oder mehrerer Rohrstränge in einem Boden, insbesondere unter Verwendung von zeitweise fließfähigem, selbst verdichtendem Verfüllbaustoff, vorgeschlagen, wie es in Anspruch 1 definiert ist, nämlich mit den Schritten eines Bereitstellens mehrerer Rohre, eines Verbindens einzelner Rohre zur Bildung des einen oder der mehreren Rohrstränge, und eines Einbauens des einen oder der mehreren Rohrstränge im Boden, insbesondere durch Einbetten des Rohrstrangs oder der Rohrstränge in zeitweise fließfähigen, selbst verdichtenden Verfüllbaustoff, wobei beim Bereitstellen und/oder Verbinden in die Rohre Innenballaste eingebracht werden, jeweils mit einem vorzugweise zylinderförmigen Ballast-Körper und einer Bewegungseinheit, die für eine Beweglichkeit des Ballast-Körpers zumindest in Längsrichtung des Rohrstrangs ausgestaltet ist, wobei eine längenbezogene Masse des jeweiligen Innenballasts auf Grundlage eines bei einem Einbau des Rohrstrangs auftretenden und zu kompensierenden längenbezogenen Auftriebs des Rohrstrangs bestimmt ist, wobei mehrere Innenballaste mittels ihrer Bewegungseinheiten durch den Rohrstrang bzw. die Rohrstränge bewegt werden, wobei die Innenballaste aus einem Abschnitt des Rohrstrangs bzw. aus Abschnitten der Rohrstränge durch die Bewegung entfernt werden, für den bzw. die eine Auftriebskompensation nicht mehr benötigt wird oder der bzw. die keinen Auftrieb mehr erfahren.

Erfindungsgemäß wird nach einem zweiten Aspekt ein Innenballast für einen einzubauenden Rohrstrang, insbesondere für einen in zeitweise fließfähigem, selbst verdichtendem Verfüllbaustoff einzubettenden Rohrstrang vorgeschlagen, wie er in Anspruch 7 definiert ist, nämlich mit einem vorzugweise zylinderförmigen Ballast-Körper und einer Bewegungseinheit, die für eine Beweglichkeit des Ballast-Körpers zumindest in Längsrichtung des Rohrstrangs ausgestaltet ist, wobei eine längenbezogene Masse des Innenballasts auf Grundlage eines bei einem Einbau des Rohrstrangs auftretenden und zu kompensierenden längenbezogenen Auftriebs des Rohrstrangs bestimmt ist.

Es wurde gefunden, dass ein innerhalb eines Rohrstrangs beweglich angeordneter Innenballast in einer Situation problematisch sein kann, bei der infolge einer Neigung im Rohrstrang eine Abwärtsbewegung des Innenballasts auftreten kann.

Ein einem Aspekt der vorliegenden Erfindung zugrundeliegendes Ziel ist es, die Problematik eines Innenballasts innerhalb eines zumindest teilweise geneigten Rohrstrangs zu adressieren.

Es ist daher gewünscht, eine Lösung vorzustellen, die verhindert, dass sich ein in Längsrichtung des Rohrstrangs beweglicher Innenballast infolge einer Neigung im Rohrstrang ungewollt abwärts bewegt, wobei aber zudem auch weiterhin eine grundsätzliche Beweglichkeit des Innenballasts gegeben ist, so dass der Innenballast innerhalb des Rohrstrangs an die Abschnitte bewegt werden kann, in denen eine Auftriebskompensation gewünscht ist bzw. der Innenballast in den Rohrstrang eingebracht und daraus entfernt werden kann.

Erfindungsgemäß wird nach einem dritten Aspekt eine Bremse für einen in einem Rohrstrang aufzunehmenden Innenballast vorgeschlagen, wie sie in Anspruch 10 definiert ist, nämlich mit wenigstens einem Vorderelement und wenigstens einem Hinterelement, wobei das Vorderelement und das Hinterelement relativ zueinander in Längsrichtung der Bremse beweglich ausgestaltet sind, mehreren radial beweglichen Bremssegmenten, die zwischen dem Vorderelement und dem Hinterelement angeordnet sind und die ausgestaltet sind, eine Innenseite des Rohrstrangs für eine Bremswirkung zu kontaktieren, und einer das Vorderelement und das Hinterelement miteinander koppelnden Federeinrichtung, die gegen eine relative Auseinanderbewegung von Vorderelement und Hinterelement vorgespannt ist, wobei das Vorderelement und/oder das Hinterelement eine Schräge aufweist, die zum Übertragen einer Relativbewegung zwischen Vorderelement und Hinterelement in Längsrichtung in eine radiale Bewegung der Bremssegmente ausgestaltet ist, wobei die Bremse so ausgestaltet ist, dass, wenn das Vorderelement eine externe Zugkraft erfährt, das Vorderelement und das Hinterelement gegen eine Wirkung der Federeinrichtung in Längsrichtung voneinander weg bewegt werden können, so dass den Bremssegmenten eine Radialbewegung nach innen ermöglicht wird, und, wenn das Vorderelement keine externe Zugkraft erfährt, das Vorderelement und das Hinterelement durch die Federeinrichtung in Längsrichtung aufeinander zu bewegt werden können, so dass durch die Schräge eine Radialbewegung der Bremssegmente nach außen bewirkt wird Erfindungsgemäß wird nach einem dritten Aspekt ein Bremsverfahren für einen in einem Rohrstrang aufzunehmenden Innenballast vorgeschlagen, bei dem ein Bremse mit wenigstens einem Vorderelement und wenigstens einem Hinterelement, wobei das Vorderelement und das Hinterelement relativ zueinander in Längsrichtung der Bremse beweglich ausgestaltet sind, mehreren radial beweglichen Bremssegmenten, die zwischen dem Vorderelement und dem Hinterelement angeordnet sind und die ausgestaltet sind, eine Innenseite des Rohrstrangs für eine Bremswirkung zu kontaktieren, und einer das Vorderelement und das Hinterelement miteinander koppelnden Federeinrichtung, die gegen eine relative Auseinanderbewegung von Vorderelement und Hinterelement vorgespannt ist, verwendet wird, wobei das Vorderelement und/oder das Hinterelement eine Schräge aufweist, die zum Übertragen einer Relativbewegung zwischen Vorderelement und Hinterelement in Längsrichtung in eine radiale Bewegung der Bremssegmente ausgestaltet ist. Wenn das Vorderelement eine externe Zugkraft erfährt, werden das Vorderelement und das Hinterelement gegen eine Wirkung der Federeinrichtung in Längsrichtung voneinander weg bewegt werden, so dass sich die Bremssegmente nach innen bewegen, womit die Bremse gelöst wird. Wenn das Vorderelement keine externe Zugkraft erfährt, werden das Vorderelement und das Hinterelement durch die Federeinrichtung in Längsrichtung aufeinander zu bewegt, so dass durch die Schräge eine Radialbewegung der Bremssegmente nach außen bewirkt wird, womit die Bremse mit dem entsprechenden Anlege der Bremssegmente an der Innenwandung bzw. der Rohrinnenwand des Rohrstrangs eine Bremswirkung erzeugt.

Sind mehrere Rohrstränge nebeneinander vorgesehen, wie dies etwa bei der Verlegung von Stromleitungen in der Regel der Fall ist, besteht ein Bedarf dahingehend, die Verlegung insgesamt effizient und konsistent vorzunehmen. Mit Konsistenz ist hier insbesondere gemeint, dass bei der Verlegung Aspekte wie die Herstellung einer Steckmuffenverbindung zwischen Rohren bzw. Rohrsegmenten mit möglichst gleichbleibender Qualität erreicht werden.

Ein einem Aspekt der vorliegenden Erfindung zugrundeliegendes Ziel ist es, einen effizienten und konsistenten Einbau von Rohrsträngen in den Boden zu ermöglichen.

Es ist daher gewünscht, eine Lösung vorzustellen, die Abläufe beim Einbau bzw. beim Verlegen mehrerer aus Rohren bzw. Rohrsegmenten zusammenzusetzender Rohrstränge von den Fähigkeiten eines jeweiligen Arbeiters unabhängiger ausführen lässt, wobei zudem eine Automatisierung bzw. Mechanisierung erreicht werden kann.

Erfindungsgemäß wird nach einem fünften Aspekt eine Rohrinstallationsvorrichtung zur parallelen Verbindung mehrerer Rohre mit parallelen Rohrsträngen mittels Steckmuffen vorgeschlagen, wie sie in Anspruch 12 definiert ist, nämlich mit einer Haltevorrichtung, die dazu ausgestaltet ist, die mehreren Rohre parallel zueinander haltend aufzunehmen, und einer Führungseinheit, die dazu ausgestaltet ist, mindestens einen der parallelen Rohrstränge zu kontaktieren, wobei die Haltevorrichtung und die Führungseinheit miteinander gekoppelt sind, derart, dass von der Haltevorrichtung gehaltene Rohre in Längsrichtung jeweils mit den entsprechenden Rohrsträngen ausgerichtet sind, wenn die Führungseinheit den wenigstens einen Rohrstrang kontaktiert, wobei die Rohrinstallationsvorrichtung dazu ausgestaltet ist, dass die von der Haltevorrichtung gehaltenen Rohre in Längsrichtung zu den jeweils entsprechenden Rohrsträngen bewegt und eine jeweilige Steckmuffenverbindung zwischen den Rohren und den jeweils vor den Rohren liegenden Rohsträngen hergestellt werden kann, wobei die Führungseinheit dazu ausgestaltet ist, das Bewegen der Rohre und/oder das Herstellen der Steckmuffenverbindungen relativ zu den parallelen Rohrsträngen zu führen.

Erfindungsgemäß wird nach einem zweiten Aspekt ein Rohrinstallationsverfahren zur parallelen Verbindung mehrerer Rohre mit parallelen Rohrsträngen mittels Steckmuffen vorgeschlagen, mit einem haltenden Aufnehmen mehrerer Rohre parallel zueinander durch eine Haltevorrichtung einer Rohrinstallationsvorrichtung und einem Kontaktieren mindestens eines der parallelen Rohrstränge durch eine Führungseinheit der Rohrinstallationsvorrichtung, wobei die Haltevorrichtung und die Führungseinheit miteinander gekoppelt sind, derart, dass von der Haltevorrichtung gehaltene Rohre in Längsrichtung jeweils mit den entsprechenden Rohrsträngen ausgerichtet sind, wenn die Führungseinheit den wenigstens einen Rohrstrang kontaktiert, wobei das Verfahren ferner ein Bewegen der von der Haltevorrichtung gehaltenen Rohre in Längsrichtung zu den jeweils entsprechenden Rohrsträngen und Herstellen einer jeweiligen Steckmuffenverbindung zwischen den Rohren und den jeweils vor den Rohren liegenden Rohsträngen umfasst, wobei beim Bewegen der Rohre und/oder beim Herstellen der Steckmuffenverbindungen die Rohre relativ zu den parallelen Rohrsträngen durch die Führungseinheit geführt werden.

Ein Teil des Hintergrunds der vorliegenden Erfindung findet sich in den folgenden Überlegungen und Erläuterungen, in denen auf eine beispielhafte Ausgestaltung von Erfindungsaspekten Bezug genommen wird, ohne dass dies als Beschränkung zu verstehen wäre.

Die Erfindung beruht nun auf dem in der Rückschau einfachen Prinzip, die unter Auftrieb stehenden Rohre nicht von außen zu ballastieren oder zu sichern, sondern im Rohr selbst für eine höhere Gewichtskraft einer Kombination von Rohr und Ballast und damit für eine Lagestabilität zu sorgen.

Das besondere technische Problem dabei ist, dass das Rohr infolge der relativ zu geringen Dichte nicht mit Wasser ballastiert werden kann und keine praktikable Alternative für das Wasser mit einer ausreichenden Dichte zur Verfügung steht. Der umgebende Flüssigboden besitzt eine Dichte von mehr als 2 Tonnen je Kubikmeter, Wasser hingegen bekanntlich nur die Hälfte. Für die Schaffung einer Gewichtskraft, die der Auftriebskraft des ZFSV vollständig oder zumindest in ausreichendem Maße entgegenwirkt, ist daher eine Masse erforderlich, die eine entsprechend große Dichte aufweist. Ferner geht es darum, die ballastierende Masse technisch möglich einfach in das Rohr zu bekommen, im Rohr weiter bewegen zu können und nach dem Erhärten des Auftriebes erzeugenden Mediums den Körper wieder aus dem Rohr herauszubekommen. Neben der Möglichkeit einer (pumpbaren) Flüssigkeit kommen, wie vorliegend erkannt wurde, für die Ballastierung auch Festkörper in Frage, allerdings mit entsprechender Konditionierung. Die einzubringenden Festkörper müssen technisch so ausgestaltet werden, dass sie trotz ihres großen Gewichts leicht zu bewegen sind.

Beispielsweise kann eine Kombination einer Rohrinstallationsvorrichtung, eines Rohrmagazins und einer Innenballastierung mit integriertem Bremssystem betrachtet werden.

Die Rohrinstallationsvorrichtung dient zur Aufnahme eines Rohrmagazins und zum insbesondere zeitgleichen Zusammenfügen von jeweils drei Rohren mit einem Rohrstrang mittels einer Steckmuffentechnik.

Das Rohrmagazin dient zur Aufnahme von neun oder zwölf (drei oder vier übereinander, drei nebeneinander) jeweils 12 m langen PE Rohren und zur Ablage der Rohre für die Rohrinstallationsvorrichtung.

Die Innenballastierung mit integriertem Bremssystem dient zur Auftriebssicherung der Leerrohre in einem flüssigen Verfüllbaustoff und zum Stoppen einer Bewegung der Innenballastierung im Fall von Gefälle im umgebenden Gelände.

Das technische Problem der Auftriebssicherung von in flüssigen Baustoffen verlegten Leerrohren, kann mit einer Innenballastierung aus beispielsweise Stahl gelöst werden. Es sind allerdings anstelle von Stahl auch andere Werkstoffe wie Gusseisen, Aluminium oder Kupfer oder Legierungen aus entsprechenden Metallen möglich. Maßgeblich ist der Aspekt der ausreichenden Dichte und damit der den Anforderungen entsprechenden Gewichtskraft, allerdings auch unter Berücksichtigung einer Wirtschaftlichkeit in der Umsetzung.

Es können etwa Elemente aus Rundmetall mit entsprechendem Durchmesser, die das erforderliche Gewicht besitzen, eingesetzt werden. Um auch bei nicht geraden zu ballastierenden Rohrstrangverläufen die Rundstahlelemente im Rohrstrang bewegen zu können, sind diese in einzelne Segmente unterteilt. Sämtliche Einzelelemente sind hier durch Schäkel miteinander verbunden, sodass sich eine Kette aus Ballastierungselementen bildet. Die Länge der einzelnen Segmente beträgt beispielsweise zwischen 2 m und 3 m. Da im für diese Anwendung angedachten Bauablauf Gesamtlängen der Rundmetallkette von mehr als 100 m erforderlich werden, ergeben sich hohe Gesamtgewichte. Um eine Bewegung durch den leeren Rohrstrang mit bereits gängigen auf einer Baustelle eingesetzten Erdbaugeräten wie Hydraulikbaggern oder mit konventionellen Winden zu ermöglichen, können die einzelnen Segmente außen beispielsweise mit Kugelrollen bestückt sein, wobei diese etwa mit jeweils fünf Stück in einer Achse ringförmig auf dem Rundmetall angeordnet sein mögen. Der Abstand zwischen den Ringen aus Kugelrollen zueinander beträgt in Abhängigkeit des Rollentyps beispielsweise 0,8 m. Auf diese Art muss von der Zugmaschine (Bagger oder Winde) lediglich der Rollreibungs- und Haftreibungswiderstand überwunden werden und es wirken am Ende im Wesentlichen ausschließlich die Rollreibungskräfte. Die Kugelrollen selbst können vorteilhafterweise aus einem Material gefertigt sein, welches das Risiko einer Beschädigung der Rohre, die meist aus Polyethylen (PE) sind, klein hält. Dazu bietet sich Nylon als Werkstoff an, da hier sowohl der Abrieb als auch der Verschleiß auf dem PE-Material der Rohre sehr gering ist. Anstelle oder ergänzend zu einem Ziehen des Innenballastes kann dieser auch mit einem eigenen Antrieb versehen sein.

Ein Vorteil besteht darin, dass somit Ballastierungskörper einfach bewegt werden können und nur in den Abschnitten eingesetzt werden müssen, in denen die Auftriebssicherung erforderlich ist. Sobald der Abschnitt, in dem der Rohrstrangs in den flüssigen Baustoff eingebaut wurde, ausreichend ausgehärtet ist und damit kein Aufrieb mehr vorherrscht, kann die Segmentkette weitergezogen werden. Die Kette mit den bis zu 50 einzelnen Segmenten wird hierbei kontinuierlich in Arbeitsrichtung weitergezogen.

Hierbei ist im vorliegenden Beispiel eine Vorrichtung zum Bremsen des gesamten Stranges unter anderem im Fall von Gefälle in Arbeitsrichtung vorgesehen. Die Bremse als Teil des gesamten Ballastierungssystems besteht beispielsweise aus einem Zylinder mit einem darin befindlichen Konus, der über eine Stange und Ringmuttern am Anfang und Ende mit der Ballastierungskette verbunden ist. Eine entsprechend dimensionierte Feder sorgt nun dafür, dass der Konus nach Zugentlastung der Ringmutter in die Bremse gedrückt wird und somit die Bremsbacken gegen die Rohrinnenwand drücken. Sofern eine Zugkraft an der Ringmutter aufgebracht wird, zieht sich der Konus aus dem Bremszylinder, wodurch die Bremse entlastet wird. Die Bremse ist somit ohne Haltekraft und die Kette kann gezogen werden. Wenn diese sich nun durch Hangabtriebskraft aufgrund von Gefälle in Arbeitsrichtung bewegen will, drückt sich nun der Konus aufgrund der dadurch entstehenden Zugentlastung der Ringmutter in den Zylinder. Mit außen auf dem Konus aufgebrachten PE-Segmenten übt dieser gleichmäßig nun so großen Druck auf die Innenwand des Rohrstrangs aus, dass eine Bremswirkung einsetzt, die die Bewegung relativ zum Rohrstrang unterbindet. Werden nun in der Folge wieder Zugkräfte auf die Kette aufgebracht, löst sich die Bremse automatisch und die Kette kann weiter bewegt werden. Soweit die Innenballastierung im Zuge des Verlegevorgangs temporär abgekoppelt werden muss, z.B. um ein weiteres Leerrohr zu verlegen, hilft die Bremse außerdem dabei die Innenballastierung im bereits verlegten Rohrstrang in Position zu halten. Im abgekoppelten Zustand wirkt somit keine Zugkraft an der Bremse, wodurch eine Bremswirkung erzielt wird. Dadurch bewegt sich die Innenballastierung weder in Arbeitsrichtung noch entgegen der Arbeitsrichtung und wird somit fixiert.

Um den Einsatz auf der Baustelle möglichst effizient zu gestalten, kann die Weiterbewegung der Ballastierungskette mit dem Prozess der Rohrablage und Muffenverbindung des nächsten Rohrstücks gekoppelt sein. Die Verlegung der Rohre im Graben erfolgt dabei über eine Rohrinstallationsvorrichtung, welche mit einem wiederverwendbaren Rohrmagazin beschickt werden kann. Dazu kann zunächst in jedes PE-Rohr mittels Einblastechnik oder durch die Schwerkraft infolge der Schrägstellung ein Zugseil eingebracht werden, das dazu vorgesehen ist, daran die Ballastierungskette anzuhängen. Das Rohrmagazin mit einer Metallrahmenkonstruktion wird daraufhin mit beispielsweise neun oder zwölf der im Flüssigboden einzubauenden Rohren bestückt. Anschließend wird die gesamte Rohrinstallationsvorrichtung beim Beginn des Verlegens mit dem eingesetzten Rohrmagazin mit dem Bagger, einem vergleichbaren Gerät oder einer entsprechenden Maschine in den vorab ausgehobenen Rohrgraben gehoben. Im Rohrmagazin sind die Rohre in Kammern mit jeweils drei Rohren angeordnet, sodass hier drei nebeneinanderliegende Rohre á 12 m im Graben verlegt werden können. Damit die Rohre nicht selbstständig durch das Magazin fallen, ist beispielsweise ein Kettensystem mit Rohrauflagergliedern im Magazin integriert, wodurch die Rohre einzeln und kontrolliert in den Graben abgelassen werden können. Dieses Kettensystem wird beispielsweise durch einen rein mechanischen Mechanismus ausgelöst.

Die Rohrinstallationsvorrichtung besitzt eine Aufnahme und Führung, um das Magazin in seiner Soll-Position zu positionieren und entsprechend gegen ein Verrutschen zu sichern. Die Verbindung der einzelnen Leerrohre im Graben erfolgt mittels Steckmuffenverbindungen. Es werden dazu Rohre vorgesehen, die einseitig über eine bereits angebrachte oder auch eine aufgesteckte Muffe verfügen. Hierzu kann wahlweise auf werksseitig mit Steckmuffen bestückte Rohre oder auf Rohre mit manuell montierten Steckmuffen zurückgegriffen werden. Im Rohrgraben erfolgt das Verbinden zweier voreinander liegenden Rohre (also der Anschluss eines Rohres an einen Rohrstrang), indem das aus dem Magazin abgelassene Rohr durch einen Mechanismus in die Steckmuffe des zuvor verlegten Rohres geschoben wird. Dabei ist ein produktmäßig vordefinierter Steckweg zu beachten, um die Rohre ausreichend weit in die Steckmuffe bis über die Dichtung zu schieben.

Für diesen Verfahrensschritt sind im vorliegenden Beispiel zwei Systeme an der Rohrinstallationsvorrichtung montiert. Dabei dient das erste System dem Einführen und Positionieren des neu abgelassenen Rohres unmittelbar vor und in einer Flucht des zuvor verbauten Rohres bzw. Rohrstrangs.

Das zweite System erfüllt das finale Stecken des Rohres in die Steckmuffe. Der erste Schritt, das Einführen und Positionieren erfolgt beispielsweise durch eine manuell bedienbare Vorrichtung. Diese ist am hinteren Ende der Rohrinstallationsvorrichtung (also im Bereich der zu erstellenden Steckverbindung zwischen Rohrstrang und Rohr) montiert. Sie wird nach dem Absetzen des Rohres auf das Rohr geschoben und mittels Umlegen eines Hebels am Rohr fixiert.

Das Fixieren funktioniert beispielsweise nach einer Art Spannwangenkonstruktion, indem vier anzulegende Wangen mit ausreichend Kraft an die Rohraußenwand gedrückt werden. Sobald das Rohr in dem System eingespannt ist, kann das gesamte System manuell in Richtung der Muffe gezogen und das Rohr in die Muffe geführt werden. Im Anschluss daran kann das System durch ein erneutes Betätigen des Spannhebels entspannt werden und die Vorrichtung wird wieder vom Rohr gelöst.

Diese Verfahrensschritte werden auch mit den zwei weiteren im Graben positionierten Rohrsträngen durchgeführt. Damit sind dann alle drei im Graben nebeneinanderliegenden Rohre nacheinander in die Muffen eingeführt. Für das finale Einstecken der Rohre in die Dichtringe der Muffen, wird ein Schiebemechanismus am vorderen Ende der Rohrinstallationsvorrichtung montiert. Dieser kann durch etwa eine Baggerschaufel ausgelöst werden.

Bereits beim Absetzen einer Rohrlage auf die Rohrgrabensohle fassen die Rohre hierfür in eine einseitig verschlossene Halbschalenkonstruktion. Durch das Betätigen vom Mechanismus durch den Löffel vom Hydraulikbagger wird die Konstruktion in Richtung der Muffe bewegt. Damit kann das Rohr über einen vordefinierten Weg ausreichend weit in die Muffe geschoben werden. Im Anschluss an das Einschieben der Rohre in die Steckmuffenverbindung erfolgt das Verschieben der Rohrinstallationsvorrichtung in die Position der nächsten Rohrablage.

Hierfür ist eine entsprechende Aufnahme für den Hydraulikbagger an der Rohrinstallationsvorrichtung vorhanden. Der außerhalb des Grabens befindliche Hydraulikbagger kann über diese Aufnahme die gesamte Rohrinstallationsvorrichtung nach sukzessiven Grabenaushub entlang der Arbeitsrichtung vor Kopf verschieben.

In diesem Schritt kann zudem gleichzeitig die Innenballastierung, welche durch das Verbindungselement mit der Rohrinstallationsvorrichtung verbunden ist, durch das neu verlegte Rohr gezogen werden.

Das Ablegen der Rohre, der Steckvorgang sowie das Weiterziehen der Innenballastierung kann komplett mit einem Hydraulikbagger durchgeführt werden. Es ist also lediglich ein einziges Arbeitsgerät mit einem einzigen Bediener für alle diese Arbeitsschritte notwendig. Das Verbindungselement der bereits verlegten Leerrohre wird nach dem Zugvorgang der Innenballastierung entkoppelt und aus dem Graben entfernt. Der Vorgang wird insgesamt dreimal oder viermal wiederholt, sodass mit einem Magazin 3 oder 4 x 36 m Leerrohr verlegt werden.

Im Anschluss wird das leere Rohrmagazin aus der Rohrinstallationsvorrichtung entfernt und durch ein weiteres vorbereitetes Rohrmagazin ersetzt.

Unabhängig von den konkreten Einzelheiten des oben geschilderten Beispiels ermöglicht die vorliegende Erfindung eine zügige und kontinuierliche Verlegung der Rohre. Durch das Magazin mit integriertem Kettensystem können die Rohre zudem präzise und in der richtigen Position abgelegt werden, wodurch sowohl die Arbeitsgeschwindigkeit als auch die Qualität der Verlegung hinsichtlich Beanspruchung und Lagegenauigkeit erhöht wird.

Durch das Ablagesystem und den Steckprozess wird weitaus weniger manuelle Arbeit als bei der konventionellen Verlegeart benötigt. Die Anzahl sowie die körperliche Belastung der benötigten Arbeitskräfte können reduziert werden. Viele der Arbeiten können vom Hydraulikbagger aus gesteuert und ausgelöst werden, andere durch einen Facharbeiter von der Kommandobrücke aus, sodass die Personalstärke innerhalb und am Graben reduziert werden kann.

Die Innenballastierung der Leerrohre ermöglicht es, den Graben in einem einzigen Arbeitsschritt mit einem flüssigen Verfüllbaustoff zu verfüllen. Es sind keinerlei Nacharbeiten wie z.B. das Entfernen von Ballastierungskörpern und Nachbefüllen dadurch entstandener Hohlräume nötig. Die Arbeitsschritte zum Ausheben des Rohrgrabens, das Ablegen und Verbinden der Rohre, ihre Ballastierung und die Kontrolle über die Lagegenauigkeit können automatisiert werden.

Eine präzise Ablage und ein geführter Steckprozess reduzieren das Risiko von Beschädigungen an den Rohren während des Verlegeprozesses.

Dadurch, dass die Verlegung der Rohre von der Verfüllung weitestgehend entkoppelt werden kann, wird ermöglicht, Abhängigkeiten, wie sie bisher bestanden, zu vermeiden. Die Verfüllung kann unabhängig von der bereits verlegten Rohrstrecke erfolgen, ohne das unnötige Leerlaufzeiten oder Standzeiten entstehen.

Durch eine mögliche erhöhte Arbeitsgeschwindigkeit aufgrund der Verlegung von drei Rohren gleichzeitig durch halbautomatisierte Arbeitsprozesse kann die Arbeit ohne Unterbrechung durchgeführt werden, sodass die Gesamtproduktivität der Rohrverlegung in einem flüssigen Verfüllbaustoff erhöht wird.

Durch weniger manuelle Handhabung von schweren Rohren wird das Verletzungsrisiko auf der Baustelle reduziert.

Die Erfindung erlaubt es, lediglich einen Abschnitt des Rohrgrabens von 13 m offen zu halten, in dem sich die Rohrinstallationsvorrichtung befindet. Das ist wesentlich bodenschonender als im konventionellen Bau mehrere hundert Meter Rohrgraben offen zu halten. Ferner kann auf eine aufwändige Wasserhaltung zum Ablegen der Rohre verzichtet werden und das anstehende Grundwasser wird entsprechend geschont.

In einer vorteilhaften Ausgestaltung eines Aspekts der Erfindung umfasst die Bewegungseinheit eines Innenballastes jeweils eine mit dem Ballast-Körper verbundene Zug-Verbindung, die zur Aufnahme einer Zugkraft für eine Bewegung des Ballast-Körpers durch den Rohrstrang ausgestaltet ist, und eine mit dem Ballast-Körper verbundene Zieh-Verbindung, die zur Weitergabe einer Zugkraft an einen weiteren Innenballast ausgestaltet ist, und Roll-Elemente, die für eine Beweglichkeit des Ballast-Körpers zumindest in Längsrichtung des Rohrstrangs ausgestaltet sind, wobei mehrere Innenballaste durch ihre Zug- bzw. Zieh-Verbindungen miteinander verbunden werden und die verbundenen Innenballaste unter Abrollen auf den Roll-Elementen beim Einbringen der Innenballaste und/oder bei einem Entfernen der Innenballaste durch den Rohrstrang bzw. die Rohrstränge bewegt werden.

Indem die Innenballastierung auf eine solche Weise ausgestaltet ist, kann eine Beweglichkeit ohne großen technischen Aufwand in gewünschter Weise erreicht werden.

In einer bevorzugten Variante der obigen Ausgestaltung wird ein Rohr an einem in einer Baurichtung befindlichen Ende eines gebildeten Rohrstranges mit dem Rohrstrang verbunden, wobei an dem gegenüberliegenden Ende des Rohrstranges wenigstens ein Innenballast eingebracht und mit einem bereits im Rohrstrang befindlichen Innenballast verbunden wird.

Durch das Einbringen auf der von der Verbindung mit dem Rohrstrang abgewandten Seite kann der Innenballast unabhängig von der Verbindung Rohr-Rohrstrang eingebracht werden, so dass die Maßnahmen des Einbringens und des Verbindens einander nicht behindern.

In einer weiteren bevorzugten Variante der obigen Ausgestaltung wird wenigstens ein Innenballast an einem in einer Baurichtung befindlichen Ende eines gebildeten Rohrstranges mit einem bereits im Rohrstrang befindlichen Innenballast verbunden wird, wobei sich der wenigstens eine Innenballast in einem zu verbindenden Rohr befindet und/oder das zu verbindende Rohr den wenigstens einen Innenballast beim Verbinden mit dem Rohrstrang aufnimmt.

Alternativ oder ergänzend zu der obigen Variante ist es auch möglich, den Innenballast gewissermaßen gemeinsam mit dem zu verbindenden Rohr am Ende des Rohrstrangs in Baurichtung vorzusehen, zumindest solange, bis eine gewünschte Länge einer Kette von Innenballasten erreicht ist, die dann entsprechend weitergezogen wird.

In einer anderen vorteilhaften Ausgestaltung eines Aspekts der Erfindung umfasst die Bewegungseinheit eine Antriebseinheit zum Bewegen des Ballast-Körpers.

Das Vorsehen einer Antriebseinheit erlaubt eine selbstständige Bewegung des Innenballastes innerhalb des Rohrstrangs. Es ist auch möglich, diese Ausgestaltung mit der obigen Ausgestaltung zu kombinieren, bei der einen Innenballast zum Ziehen und zum Gezogenwerden ausgestaltet ist.

In einer anderen vorteilhaften Ausgestaltung eines Aspekts der Erfindung wird das Verbinden einzelner Rohre mit dem Rohrstrang unter Nutzung einer Rohrinstallationsvorrichtung durchgeführt wird, die mittels einem insbesondere austauschbaren Rohrmagazin, das jeweils mehrere Rohre vorhält, ausgestattet ist.

Die Nutzung einer Rohrinstallationsvorrichtung erlaubt es, die Verbindung von Rohren und Rohrstrang zu mechanisieren, womit eine bessere Wiederholbarkeit möglich ist, so dass besser sichergestellt werden kann, dass die Verbindung bestimmten Kriterien genügt. Das Rohrmagazin erlaubt es dabei, mehrere Rohre, insbesondere übereinander und nebeneinander, zur Verbindung vorzuhalten, wobei dann durch einen Austausch des Rohrmagazins die Rohrinstallationsvorrichtung weiter vor Ort verbleiben kann, auch wenn die im Rohrmagazin enthaltenen Rohre eingebaut wurden. Es kann auch vorgesehen sein, dass die Rohre auf der Baustelle in das Rohrmagazin in der Rohrinstallationsvorrichtung eingebracht werden, so dass das Rohrmagazin in dieser Hinsicht dann als Zuführpuffer dient.

In einer bevorzugten Variante der obigen Ausgestaltung wird die Rohrinstallationsvorrichtung nach Verbinden eines oder mehrerer Rohre mit einem Rohrstrang oder mehrerer Rohrstränge in einer Baurichtung von dem Rohrstrang oder den Rohrsträngen wegbewegt, wobei dabei insbesondere mittels der Rohrinstallationsvorrichtung die in dem Rohrstrang oder in den Rohrsträngen befindlichen Innenballaste durch den Rohrstrang bzw. die Rohrstränge bewegt werden.

Die Rohrinstallationsvorrichtung kann mit dem Baufortschritt bewegt werden, wobei hierbei insbesondere auch eine Bewegung der Innenballastierung bewirkt werden kann.

In einer weiteren bevorzugten Variante der obigen Ausgestaltung sind die Rohre zur Verbindung mittels Steckmuffen ausgestaltet, wobei die Rohrinstallationsvorrichtung ein jeweiliges Rohr hält und relativ zum Rohrstrang verschiebt, um die Steckmuffenverbindung herzustellen.

Steckmuffenverbindungen sind an sich bekannte Ansätze zur Verbindung von Rohren, die hier in vorteilhafterweise genutzt werden können.

In einer anderen vorteilhaften Ausgestaltung eines Aspekts der Erfindung umfasst die Bewegungseinheit eines Innenballastes
- eine mit dem Ballast-Körper verbundene Zug-Verbindung, die zur Aufnahme einer Zugkraft für eine Bewegung des Ballast-Körpers durch den Rohrstrang ausgestaltet ist, eine mit dem Ballast-Körper verbundene Zieh-Verbindung, die zur Weitergabe einer Zugkraft an einen weiteren Innenballast ausgestaltet ist, und Roll-Elemente, die für eine Beweglichkeit des Ballast-Körpers zumindest in Längsrichtung des Rohrstrangs ausgestaltet sind, und/oder
- eine Antriebseinheit zum Bewegen des Ballast-Körpers.

Wie bereits oben ausgeführt, kann eine passive, lediglich durch Außeneinwirkung bewegliche Innenballastierung vorteilhaft sein, während alternative oder ergänzend auch ein Eigenantrieb vorgesehen sein kann.

In einer vorteilhaften Ausgestaltung eines Aspekts der Erfindung umfasst die Bewegungseinheit eines Innenballastes Roll-Elemente, die für eine Beweglichkeit des Ballast-Körpers zumindest in Längsrichtung des Rohrstrangs ausgestaltet sind, wobei die Roll-Elemente Kugelrollen aufweisen und/oder zur Kontaktierung mit dem Rohrstrang vorgesehene Abschnitte der Roll-Elemente Polyamid, insbesondere Nylon, Stahl oder eine Kombination davon aufweisen oder daraus bestehen und/oder mehrere, insbesondere wenigstens fünf, Roll-Elemente an einander in Längsrichtung des Ballast-Körpers entsprechenden Stellen des Ballast-Körpers außen am Ballast-Körpers angeordnet sind, vorzugweise mit gleichen Intervallen, und/oder die Roll-Elemente am Ballast-Körper in Längsrichtung so angeordnet sind, dass für einen Innendurchmesser des Rohrstrangs innerhalb eines vorbestimmten Bereichs bei jeder Lage des Ballast-Körpers wenigstens drei Roll-Elemente für eine Kontaktierung mit einer Innenfläche des Rohrstrangs vorgesehen sind.

Die Anzahl von Roll-Elementen kann anhand einiger Parameter zu wählen sein, zu denen u.a. die Größe der Roll-Elemente und deren Tragfähigkeit zählen. Größere Rollen mit mehr Tragfähigkeit könnten beispielsweise auch in geringerer Zahl vorgesehen werden.

Es ist nicht notwendig, dass die Intervalle oder Abstände zwischen den Roll-Elementen gleich sind oder einander entsprechen, auch asymmetrische Anordnungen sind möglich.

Die Zahl der entlang eines Innenballasts gleichzeitig mit der Innenfläche des Rohrs bzw. Rohrstrangs in Kontakt stehenden Roll-Elemente ergibt sich auch aus der Länge der Anordnung insgesamt, so dass unter Umständen auch zwei Kontakte ausreichen oder aber mehr als drei nötig erscheinen.

In einer bevorzugten Variante der obigen Ausgestaltung weist die Zug-Verbindung und/oder die Zieh-Verbindung jeweils eine Öse, insbesondere eine Wirbelöse, auf und/oder ist mit einem Schäkel versehen.

Auf diese Weise können vorteilhaft Zugkräfte aufgenommen und weitergegeben werden.

In einer weiteren bevorzugten Variante der obigen Ausgestaltung umfasst der Innenballast eine Bremse, die vorzugweise zur Einwirkung auf eine Innenfläche des Rohrstrangs vorgesehen ist und/oder die vorzugsweise bei einer Zugentlastung eine Bremswirkung entfaltet.

Eine solche Bremse erlaubt es, unerwünschte Bewegungen des Innenballasts zu vermeiden, wobei die Bremse auch separat vom Innenballast vorgesehen werden kann, also mit dem Innenballast lediglich gekoppelt ist, ohne selbst Teil davon zu sein,

In einer anderen vorteilhaften Ausgestaltung eines Aspekts der Erfindung umfasst die entsprechende Bremse Roll-Elementen, die für eine Beweglichkeit des Bremse zumindest in Längsrichtung des Rohrstrangs ausgestaltet sind, wobei insbesondere die Roll-Elemente Kugelrollen aufweisen und/oder zur Kontaktierung mit dem Rohrstrang vorgesehene Abschnitte der Roll-Elemente Polyamid, insbesondere Nylon, Stahl oder eine Kombination davon aufweisen oder daraus bestehen und/oder mehrere, insbesondere wenigstens fünf, Roll-Elemente an einander in Längsrichtung der Bremse entsprechenden Stellen der Bremse außen an der Bremse angeordnet sind, vorzugweise mit gleichen Intervallen, und/oder die Roll-Elemente an den Bremssegmenten vorgesehen sind, wobei die Roll-Elemente an den Bremssegmenten in radialer Richtung federnd gehalten sind.

In einer anderen vorteilhaften Ausgestaltung eines Aspekts der Erfindung ist die Bremse mit einem Anschlag zur Begrenzung der relativen Auseinanderbewegung von Vorderelement und Hinterelement versehen, und/oder die Bremssegmente sind mit einem oder mehreren Federelementen versehen, die die Bremssegmente gegen eine nach außen gerichtete Radialbewegung vorspannen.

Die vorgespannten Bremssegmente werden durch die Federelemente davon abgehalten, mit der Wandung des Rohrstrangs in Kontakt zu treten, wenn (noch) keine Bremswirkung gewünscht ist.

In einer anderen vorteilhaften Ausgestaltung eines Aspekts der Erfindung umfasst die Haltevorrichtung mehrere Rohrhaltevorrichtungen, die jeweils dazu ausgestaltet sind, ein Rohr haltend aufzunehmen, und/oder die Führungseinheit umfasst mehrere Rohrführungseinheiten, die jeweils dazu ausgestaltet sind, einen der parallel liegenden Rohrstränge zu kontaktieren.

In einer anderen vorteilhaften Ausgestaltung eines Aspekts der Erfindung umfasst die Haltevorrichtung eine Klemmeinrichtung, die dazu ausgestaltet ist, die mehreren Rohre klemmend zu halten, und eine Schubeinrichtung, die dazu ausgestaltet ist, auf die mehreren Rohre jeweilige Schubkräfte auszuüben, wobei die Klemmeinrichtung ferner dazu ausgestaltet ist, die klemmenden gehaltenen Rohre in Längsrichtung zu den jeweils entsprechenden Rohrsträngen zu bewegen, und die Schubeinrichtung dazu ausgestaltet ist, zum Herstellen der Steckmuffenverbindungen Schubkräfte auf die mehreren Rohre auszuüben (insbesondere gleichzeitig).

In einer anderen vorteilhaften Ausgestaltung eines Aspekts der Erfindung ist die Führungseinheit für eine Bewegung in Längsrichtung relativ zum liegenden Rohrstrang und/oder relativ zur Haltevorrichtung beim Führen des Bewegens und/oder des Herstellens der Steckmuffenverbindungen ausgestaltet.

In einer anderen vorteilhaften Ausgestaltung eines Aspekts der Erfindung umfasst die Rohrinstallationsvorrichtung eine Aufnahme für ein Rohrmagazin und/oder ein Rohrmagazin, wobei das Rohrmagazin dazu ausgestaltet ist, in der Rohrinstallationsvorrichtung mehrere Rohre parallel zueinander der Klemmeinrichtung zuzuführen, wobei das Rohrmagazin insbesondere ausgestaltet ist, in Führungen jeweils mindestens zwei Rohrauflager pro Rohr aufzunehmen, so dass ein jeweiliges Rohr auf den Rohrauflagern durch das Rohrmagazin nach unten abgelassen werden kann.

Die Verwendung von Rohrauflagern, zumindest von Rohrauflagern, die beim Einbau vor Ort verbleiben, bringt im Vergleich zu einem Fall, bei dem der Rohrstrang direkt auf den Boden des Rohrgrabens verlegt wird, zusätzlichen Aufwand und Kosten mit sich, hat aber den Vorteil, dass es durch die Rohrauflager möglich ist, den Rohrstrang insgesamt besser mit Füllbaustoff zu umgeben. Vor diesem Hintergrund stellen auch im Boden verbleibende Rohrauflager keine Verwendung dar. Im Vergleich zu bekannten Auftriebssicherungen, die auch für eine Beabstandung des Rohrstrangs vom Boden des Rohrgrabens vorgesehen sind, können die Rohrauflager deutlich einfacher aufgebaut sein, schon deshalb, weil sie den Rohrstrang lediglich stützen, nicht aber auch noch ein Auftreiben verhindern müssen.

In einer anderen vorteilhaften Ausgestaltung eines Aspekts der Erfindung umfasst die Rohrinstallationsvorrichtung eine Zugvorrichtung, die ausgestaltet ist, jeweiligen den mehreren Rohrsträngen befindlichen Innenballasten verbunden zu werden, insbesondere unter Verwendung eines Zugseils oder einer Zugkette, wobei die Rohrinstallationsvorrichtung ausgestaltet ist, in Längsrichtung versetzt, insbesondere gezogen, zu werden, so dass mit dem Versetzen der Rohrinstallationsvorrichtung die Innenballaste in die mittels der Steckmuffenverbindungen mit den Rohrsträngen verbundenen Rohre gezogen werden.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung einer ersten Phase des Ablaufs beim Einbau von Rohren bzw. Rohrsträngen im Boden,
- Fig. 2: eine schematische Darstellung einer zweiten Phase des Ablaufs beim Einbau von Rohren bzw. Rohrsträngen im Boden,
- Fig. 3: eine schematische Darstellung einer dritten Phase des Ablaufs beim Einbau von Rohren bzw. Rohrsträngen im Boden,
- Fig. 4: eine schematische Darstellung einer vierten Phase des Ablaufs beim Einbau von Rohren bzw. Rohrsträngen im Boden,
- Fig. 5: eine schematische Darstellung einer fünften Phase des Ablaufs beim Einbau von Rohren bzw. Rohrsträngen im Boden,
- Fig. 6: eine schematische Darstellung einer Phase des Ablaufs beim Einbau von Rohren bzw. Rohrsträngen im Boden vergleichbar zur vierten Phase aus Fig. 4,
- Fig. 7: eine schematische, perspektivische Darstellung eines Ausführungsbeispiels eines Innenballastes mit einer Bremse,
- Fig. 8: eine schematische Schnitt-Darstellung eines Ausführungsbeispiels eines Innenballastes mit einer geöffneten Bremse,
- Fig. 9: eine schematische Schnitt-Darstellung eines Ausführungsbeispiels eines Innenballastes mit einer geschlossenen Bremse,
- Fig. 10: eine schematische, perspektivische Gesamtansicht eines Ausführungsbeispiels einer Rohrinstallationsvorrichtung,
- Fig. 11: eine schematische Draufsicht auf die Rohrinstallationsvorrichtung aus Fig. 10,
- Fig. 12: eine schematische Seitenansicht der Rohrinstallationsvorrichtung aus Fig. 10 und 11,
- Fig. 13: eine Schnittansicht der Rohrinstallationsvorrichtung entlang der Linie A-A aus Fig. 12,
- Fig. 14: eine Schnittansicht der Rohrinstallationsvorrichtung entlang der Linie B-B aus Fig. 12,
- Fig. 15: eine Schnittansicht der Rohrinstallationsvorrichtung entlang der Linie C-C aus Fig. 12,
- Fig. 16: eine schematische Darstellung eines Ausführungsbeispiels eines Stecksystems einer Rohrinstallationsvorrichtung,
- Fig. 17: eine Schnittansicht des Stecksystems entlang der Linie A-A aus Fig. 16,
- Fig. 18: eine andere schematische Darstellung des Ausführungsbeispiels eines Stecksystems einer Rohrinstallationsvorrichtung aus Fig. 16,
- Fig. 19: eine Schnittansicht des Stecksystems entlang der Linie A-A aus Fig. 18,
- Fig. 20: eine schematische Darstellung eines Ausführungsbeispiels einer Klemmvorrichtung,
- Fig. 21: schematische Darstellungen von Klemmvorrichtungen entsprechend der Darstellung von Fig. 20,
- Fig. 22: eine schematische, perspektivische Darstellung eines Ausführungsbeispiels einer Druckstütze,
- Fig. 23: eine schematische Darstellung eines Ausführungsbeispiels eines Rohrauflagers mit aufgenommenem Rohr,
- Fig. 24: eine schematische Darstellung des Rohrauflagers aus Fig. 23 ohne Rohr,
- Fig. 25: eine schematische Darstellung des Rohrauflagers aus Fig. 23 in Seitenansicht,
- Fig. 26: eine schematische Darstellung des Rohrauflagers aus Fig. 23 in Draufsicht und
- Fig. 27: ein schematisches Ablaufdiagramm eines Ausführungsbeispiels eines erfindungsgemäßen Verfahrens.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

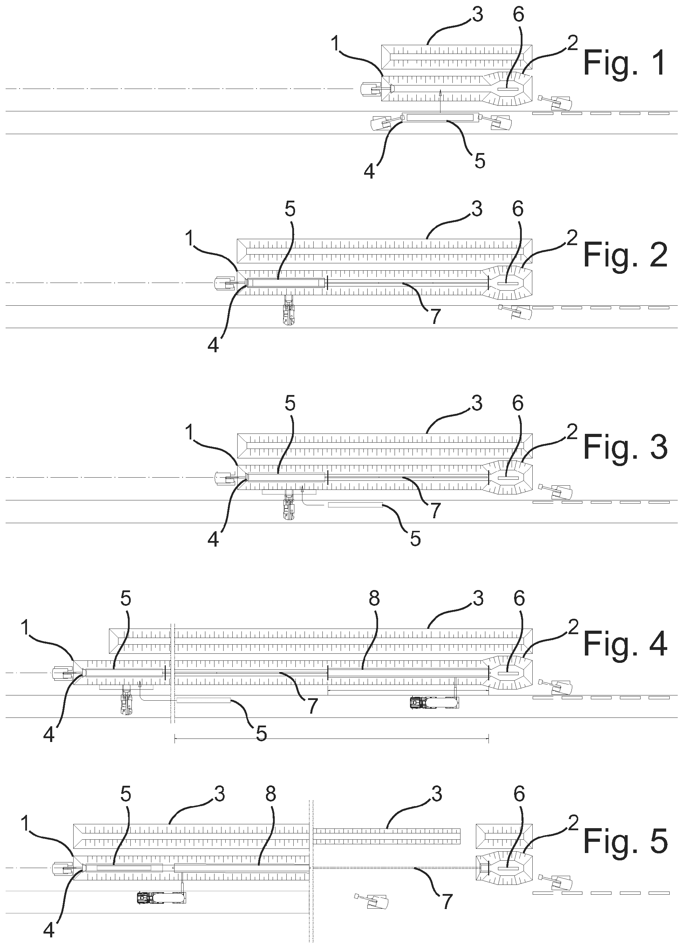

Fig. 1 zeigt eine schematische Darstellung einer ersten Phase des Ablaufs beim Einbau von Rohren bzw. Rohrsträngen im Boden.

Ein erster Abschnitt eines Rohrgrabens 1 ist zusammen mit einer Startbaugruppe 2 ausgehoben, wobei der Aushub 3 neben dem Rohrgraben abgelegt ist.

In der Darstellung der Figuren 1 bis 5 bewegt sich der Baufortschritt in einer Baurichtung, die in den Figuren nach links geht.

In Fig. 1 ist eine Rohrinstallationsvorrichtung 4 noch neben dem Rohrgraben 1 dargestellt, die bei einer ausreichenden Länge des Rohrgrabens 1 beispielsweise durch Bagger oder ähnliches in den Rohrgraben 1 umgesetzt werden kann. Hierbei weist die Rohrinstallationsvorrichtung ein mit Rohren (Rohrsegmenten) befüllten Rohrmagazin 5 auf.

Die Startbaugrube 2 ist so dimensioniert, dass dort in geeigneter Weise Innenballaste 6 vorgehalten werden können, die dann im Bauverlauf in den verlegten Rohrstrang eingeführt werden können.

In den Fig. 1 bis 5 ist der Übersichtlichkeit halber lediglich ein einzelner Rohrstrang illustriert, wobei dem Fachmann klar ist, dass in einem entsprechend ausgehobenen Rohrgraben auch mehrere Rohrstränge nebeneinander eingebaut werden können. Insbesondere für die Zwecke einer Wechselstromtrasse werden typsicherweise drei parallele Rohrstränge (im Fall von Gleichstrom zwei parallele Rohrstränge) vorgesehen, wobei die vorliegende Erfindung nicht hierauf beschränkt ist, auch wenn die Ausführungsbeispiele für drei Rohrstränge illustriert werden.

Fig. 2 zeigt eine schematische Darstellung einer zweiten Phase des Ablaufs beim Einbau von Rohren bzw. Rohrsträngen im Boden.

Im Vergleich zu Fig. 1 ist der Einbau insofern fortgeschritten, dass nun erste Rohre zum einem Rohrstrang 7 verbunden sind, der im Rohrgraben 1 liegt. Die zuvor in den Rohrgraben 1 eingesetzte Rohrinstallationsvorrichtung 4 ist mit dem Baufortschritt im Rohrgraben 1 in Baurichtung gezogen worden. Bei Vorziehen der Rohrinstallationsvorrichtung 4 wurde jeweils die im Rohrstrang 7 befindliche Kette von Innenballasten 6 (nicht im Rohrstrang 7 dargestellt) mitgezogen, wobei in der Startbaugrube 2 jeweils zusätzliche Innenballaste 6 an die Kette von Innenballasten 6 angehängt wurden, so dass sie diese Ketten nun durch den liegenden Rohrstrang erstreckt.

Es ist vorteilhaft, die Innenballaste 6 in dieser Weise schrittweise im Rohrstrang 7 mit vorzusehen, auch wenn es möglich ist, eine gewisse Anzahl von Rohren mit dem Rohrstrang 7 zu verbinden, ohne zugleich auch die Innenballast-Kette mit in die neu verbundenen Rohre einzuziehen, da im Grundsatz die Innenballaste 6 erst dann im Rohrstrang 7 benötigt werden, wenn durch den Einbau in Verfüllbaustoff ein Auftrieb vorliegt. In einem solchen Fall ist lediglich dafür zu sorgen, dass die Innenballast-Kette innerhalb des Rohrstrangs 7 bewegt werden kann, etwa durch eine ausreichend lange Kette oder ein Seil oder durch einen eigenen Antrieb zumindest von Elementen der Innenballastierung. Ein zeitlich versetztes Nachführen der Innenballastierung kann beispielsweise dann nützlich sein, wenn infolge eines Logistikproblems zwar Rohre, nicht aber Innenballaste 6 in ausreichender Zahl auf der Baustelle vorhanden sind, so dass beim Verbinden der Rohre mit dem Rohrstrang 7 nicht auf die Bereitstellung aller Innenballaste gewartet werden müsste.

Fig. 3 zeigt eine schematische Darstellung einer dritten Phase des Ablaufs beim Einbau von Rohren bzw. Rohrsträngen im Boden.

Gegenüber der Situation in Fig. 2 ist in der in Fig. 3 gezeigten Phase ein leeres Rohrmagazin 5 aus der Rohrinstallationsvorrichtung 4 entnommen und ein gefülltes Rohrmagazin steht bereit, um in die Rohrinstallationsvorrichtung 4 eingesetzt zu werden.

Fig. 4 zeigt eine schematische Darstellung einer vierten Phase des Ablaufs beim Einbau von Rohren bzw. Rohrsträngen im Boden.

Der Baufortschritt, der in Fig. 4 gezeigt ist, umfasst einerseits, dass eine im Vergleich zu Fig. 3 größere Anzahl von Rohren mit dem Rohrstrang 7 verbunden ist, und andererseits, dass (vorliegend ausgehend von der Startbaugrube 2) eine zumindest teilweise Verfüllung des Rohrgrabens 1 mit Verfüllbaustoff 8 erfolgt ist. Der Rohrstrang 7 erfährt dabei durch den Verfüllbaustoff 8 einen Auftrieb, der aber durch das Vorsehen des Innenballastes 6 in ausreichender Weise kompensiert wird.

Der Fachmann ist mit den Einzelheiten des Verfüllens mit Verfüllbaustoff 8 bzw. mit dem Einbetten des Rohrstrangs 7 im Rohrgraben 1 ausreichend vertraut, so dass hier keine weiteren ausführlichen Erläuterungen dazu notwendig sind.

Fig. 5 zeigt eine schematische Darstellung einer fünften Phase des Ablaufs beim Einbau von Rohren bzw. Rohrsträngen im Boden.

Im Vergleich zur Situation von Fig. 4 ist der Einbau des Rohrstrangs 7 weiter fortgeschritten, wobei hier etwa angenommen werden könnte, dass der Rohrstrang 7 in seiner vollständigen Länge vorliegt. Der mit Verfüllbaustoff 8 verfüllte Bereich erstreckt sich hier annähernd bis zu dem Ende des Rohrstrangs 7, wobei jenseitig noch die Rohrinstallationsvorrichtung 4 im Rohrgraben befindlich ist. Entgegen der Baurichtung (hier ausgehend von der Startbaugruppe) ist der Rohrgraben nach ausreichender Verfestigung des Verfüllbaustoffs mit einem Teil des Aushubs 3 gefüllt worden, so dass dort im Wesentlichen wieder das Bodenniveau erreicht ist. Lässt man unterschiedliche Verdichtungen o.Ä. außer Acht, ergibt sich durch das Volumen des nun eingebauten Rohrstrangs 7 und des Verfüllbaustoffs 8, dass der Aushub 3 nicht vollständig wieder in den Rohrgraben 1 eingebracht werden kann.

Wenn die Innenballaste 6 im Rohrstrang 7 nicht mehr zur Auftriebskompensation benötigt werden, können sie an dem in Baurichtung befindlichen Ende des Rohrstrangs 7 entnommen werden. Hierzu kann, soweit nötig, entsprechend der Startbaugrube 2 eine Zielbaugrube (nicht dargestellt) vorgesehen werden.

In den Fig. 4 und 5 sind wird durch zwei senkrechte Linien jeweils symbolisiert, dass der dazwischenliegende Bereich der Baustelle nicht dargestellt ist, also jeweils zwei Ausschnitte gezeigt sind.

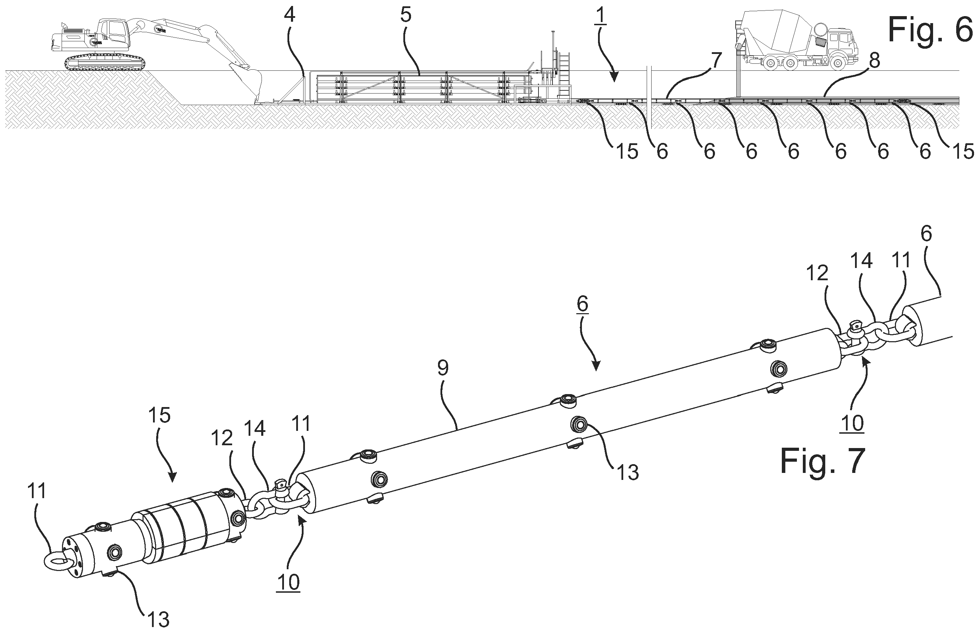

Fig. 6 zeigt eine schematische Darstellung einer Phase des Ablaufs beim Einbau von Rohren bzw. Rohrsträngen im Boden vergleichbar zur vierten Phase aus Fig. 4.

Anstelle von Aufsichten wie bei den Fig. 1 bis 5 zeigt Fig. 6 die Situation in einer gewissen Schnitt-/Seitenansicht.

Im rechten Bereich von Fig. 6 befindet sich eine Kette von Innenballasten 6 in dem Rohrstrang 7 im Rohrgraben 1, wobei der Rohrstrang 7 von Verfüllbaustoff 8 umgeben ist. Infolge der Innenballaste 6 schwimmt der Rohrstrang 7 im Verfüllbaustoff 8 trotz des Auftriebs nicht auf.

Im Rohrgraben 1 befindet sich auch die Rohrinstallationsvorrichtung 4 mit einem Rohrmagazin 5. Es ist angedeutet, dass die Rohrinstallationsvorrichtung 4 mit einem Bagger (o.ä.) in Baurichtung (also in Fig. 6 nach links) gezogen werden kann, wenn jeweils ein Rohr mit dem Rohrstrang 7 verbunden ist.

Ein beispielhafter Bauablauf kann etwa wie folgt umrissen werden. Es werden wiederverwendbare Rohrmagazin angeliefert und/oder vorgehalten, die beispielsweise jeweils werkseitig mit 9 oder auch 12 (3x3 oder 3x4) Kabelschutzrohre Da250 bestückt werden. Die Rohrmagazine können ferner durch Einführen von Zugkettensegmente, vorteilhafterweise mit einem automatisierten Verbindungssystem (nicht dargestellt) weiter vorbereitet werden. Im Bereich einer BE-Fläche kann eine Rohrballastierung eingerichtet werden und der Beginn eines Rohrgrabens wird erstellt. Der Rohrgraben muss hierbei zunächst nicht wesentlich länger als die Rohrinstallationsvorrichtung sein, auch wenn es im Grunde möglich (wenn auch nicht vorteilhaft) ist, einen größeren Bereich oder gar den vollständigen Rohrgraben auszuheben. Die Rohrinstallationsvorrichtung wird in den Rohrgraben eingesetzt, etwa bereits mit befülltem Rohrmagazin. Hieran schließt sich die Verbindung der Rohre mit dem Rohrstrang an, wobei die Rohre jeweils positioniert, mit dem Rohrstrang verbunden werden und vorteilhafterweise mit dem Versetzen (Vorziehen) der Rohrinstallationsvorrichtung der im Rohrstrang befindliche Innenballast durch den Rohrstrang gezogen wird. Bis eine gewünschte Länge der Ketten von Innenballasten erreicht ist, werden in einer Startbaugrube weitere Innenballaste an die Ketten angehängt. Bei einem 3x3 Rohrmagazin sind 3 Hubvorgänge (im Fall von 12 m Rohren also 36 m Verlegestrecke) pro Rohrmagazin für drei parallele Rohrstränge möglich. Entsprechend kann in geeigneten Intervallen das Rohrmagazin getauscht werden. Dabei wird ein volles Rohrmagazin zum Einsatzort transportiert (ggf. kann auch eine temporäre Zwischenlagerung eines befüllten Rohrmagazins am Einsatzort vorgesehen sein), das leere Rohrmagazin aus der Rohrinstallationsvorrichtung entnommen und durch das volle Rohrmagazin ersetzt, wonach das leere Rohrmagazin zu einem Zwischenlagerplatz (Rohrlager) abtransportiert und neu bestückt werden kann. Der Rohrgraben kann vollständig mit Flüssigboden in einem Arbeitsschritt verfüllt werden. Grundsätzlich kann dies von der Rohrverlegung durch die Rohrinstallationsvorrichtung entkoppelt werden. Die Rückverfüllung des Rohrgrabens mit Oberboden kann sukzessiv in Abhängigkeit zur Aushärtung des Flüssigbodens erfolgen. Schließlich werden bei Fertigstellung einer Sektion die Rohrinstallationsvorrichtung aus dem Graben sowie die Innenballastierung aus den Rohrsträngen (Leerohrsystem) entnommen. Nach der Entnahme können die Grabenabschnitte am Anfang und Ende, welche für den Ein- und Ausbau der Rohrballastierung angelegt und offen gehalten wurden, mit Flüssigboden befüllt werden. Diese Bereiche können beispielsweise jeweils (auch) einen Übergang zwischen einem Abschnitt, in dem eine herkömmliche Verlegetechnik eingesetzt wird/wurde, und einem Abschnitt darstellen, in dem die Erfindung eingesetzt wurde. In einem solchen Übergangsbereich können Rohrstränge mit Passtücken (Rohren) verbunden werden, gefolgt von einem Einbringen von Flüssigboden und einem Verfüllen mit zwischengelagertem Aushub.

Bei einem hier betrachteten Ausführungsbeispiel werden PE-Rohre mit einem Durchmesser von DN 250mm betrachtet. Ein solches Rohr erzeugt in einer Flüssigkeit der Dichte 2.1 tot/cbm eine statische Auftriebskraft von 0,92kN je laufendem Meter. Aufgrund von Scherkrafteffekten, wie sie in Suspensionen auftreten, entsteht eine zusätzliche Auftriebskraft von 0,105 kN je laufenden Meter. Mit einer einberechneten Sicherheit ergeben sich somit insgesamt 1,05 kN Auftriebskraft pro Rohrmeter. Die Gewichtskraft muss demnach auf jedem Meter mehr als 105kg sein, damit das Rohr keinen wirksamen Auftrieb erfährt. Im Fall einer Wechselspannungsleitung im Höchstspannungsübertragungsnetz mit einer Spannungsebene von 380kV sind drei Leiter in einem Graben zu verlegen, demnach auch drei parallel verlaufende Schutzrohre. Aus betriebstechnischen Gründen werden die Kabel mit einem Durchmesser von bis zu 15cm in Rohren aus PE verlegt. Die PE-Rohre selbst werden in einer Bettung aus Flüssigboden abgelegt und müssen daher bei ihrem Einbau in der horizontalen und vertikalen Lage gesichert werden.

Mit einem LKW werden die PE-Rohre, mit einer Lieferlänge von 12 m haben, im 4-3-4 Lagen Bündel geliefert. Die Rohre werden hieraus in die 9er- oder 12er-Rohrmagazine umgelagert. In der zu verlegenden Trasse wird mit einem Hydraulikbagger eine Startbaugrube mit der erforderlichen Tiefe und Seitenböschung ausgehoben. Die Breite und Länge der Grube ist so gestaltet, dass darin die Ballastierungssegmente einfach bewegt werden können. Ein Hydraulikbagger mit Trapezlöffel hebt nun in Arbeitsrichtung, d.h. in Richtung der zu verlegenden Rohre einen Graben mit einer Sohlbreite von mindestens 1,80 m aus. Sobald der Graben eine Länge von ca. 13 m erreicht hat, wird die Rohrinstallationsvorrichtung mit bereits installiertem Magazin (gefüllt mit 3x3 oder 4x3 Schutzrohren) in den Graben gesetzt. Daraufhin wird die untere Rohrlage über das Kettensystem mit einem Schneckengetriebe in den Graben abgelegt. Nun erfolgt das Anschäkeln des ersten, dann zweiten und dritten sowie ggf. vierten Ballastierungselements für alle drei nebeneinander im Graben liegenden 12 m-Leerrohre, bis diese jeweils vollständig ballastiert sind. Zudem erfolgt die Kopplung der Innenballastierung mit dem Verbindungselement an der Rohrinstallationsvorrichtung, damit die Innenballastierung sukzessiv mit jedem weiteren verlegten Rohr in Arbeitsrichtung weitergezogen werden kann. Daraufhin hebt der Hydraulikbagger den nächsten 12 m Abschnitt vor Kopf aus. Während des Aushubprozesses wird die Rohrinstallationsvorrichtung samt Magazin sukzessiv zum Aushubfortschritt nachschreitend mit dem Hydraulikbagger vorgezogen. Sobald die Rohrinstallationsvorrichtung weitergezogen wurde, kann der flüssige Verfüllbaustoff auf der fertig verlegten Rohrstrecke eingebracht werden. Im Anschluss wird das Verbindungselement von der Innenballastierung entkoppelt und aus dem Graben entfernt, sodass ein Ablegen der nächsten Rohrlage samt zugehörigen Verbindungselement aus dem Magazin über das Kettensystem in den Rohrgraben erfolgen kann. Bevor die Rohre zusammengeführt werden, wird das Verbindungselement des abgelegten Rohres mit der Innenballstierung gekoppelt. Daraufhin erfolgt die Verbindung der Leerrohre mit der Klemm- und Schiebervorrichtung über die vorinstallierten Steckmuffen. Dieser Ablauf wird so lange wiederholt, bis alle Rohre aus einem Magazin verarbeitet worden sind. Nach Entnahme des leeren Rohrmagazins erfolgt das Einlegen des nächsten vollen Rohrmagazins, um die Sektion weiter zu bearbeiten. Die Verfüllung des Rohrgrabens mit einem flüssigen Verfüllbaustoff erfolgt in einem Arbeitsschritt innerhalb definierter Verfüllabschnitte und kann grundsätzlich von der Rohrverlegung entkoppelt werden. Die Ballastierungskette kann in ihrer Länge begrenzt und weitergezogen werden, wenn ausreichend Abschnittslänge zum Ballastieren erreicht ist. Dies hängt maßgeblich von der Dauer der Verfestigung des flüssigen Baustoffs ab. Für das hier beschriebene Ausführungsbeispiel wird von einer Tagesleistung von 200 m erstellter Rohrgraben mit drei Rohren ausgegangen. Bei einem Nettoarbeitstag von etwa acht Stunden und einer Aushärtezeit des flüssigen Baustoffs nach der kein Auftrieb mehr erzeugt wird von vier Stunden ergibt sich für die Ballastierungskette eine Länge von 100 m.

Fig. 7 zeigt eine schematische, perspektivische Darstellung eines Ausführungsbeispiels eines Innenballastes mit einer Bremse.

Der Innenballast 6 weist einen zylinderförmigen Ballast-Körper 9 und eine Bewegungseinheit 10 auf, die dem Ballast-Körper 9 in einem Rohr oder Rohrstrang (nicht dargestellt) eine Beweglichkeit zumindest in Längsrichtung verleiht.

Im vorliegenden Ausführungsbeispiel umfasst die Bewegungseinheit 10 eine Zug-Verbindung 11, eine Zieh-Verbindung 12 und Roll-Elemente 13, so dass der Innenballast dazu ausgestaltet ist, durch den Rohrstrang gezogen zu werden, wobei die Roll-Elemente auf der Innenseite des Rohrstrangs abrollen. In einer Alternative (nicht dargestellt) umfasst die Bewegungseinheit eine Antriebseinheit zum Bewegen des Ballast-Körpers.

Die Zug-Verbindung 11 und die Zieh-Verbindung 12 sind als Ösen am Ballast-Körper 9 ausgebildet und sind jeweils mit einem Schäkel 14 mit einer Bremse 15 und einem anderen Innenballast 6 verbunden.

Die Zug-Verbindung 11 nimmt eine Zugkraft auf, die im vorliegenden Beispiel von der Bremse 15 weitergegeben wird. Erfindungsgemäß kann vorgesehen sein, dass das erste Element einer Innenballastierung als Bremse 15 ausgestaltet ist (bzw. eine Bremse aufweist), während die entgegen der Baurichtung anschließenden Innenballaste jeweils lediglich angehängt sind. Es ist allerdings auch möglich, in einer Kette von Innenballasten 6 mehrere Bremsen 15 oder mit Bremsen ausgebildete Elemente vorzusehen.

Die von der Zug-Verbindung 11 aufgenommene Zugkraft dient dazu, den Innenballast 6 durch das Rohr bzw. den Rohrstrang zu ziehen, wobei die Zugkraft durch die Zieh-Verbindung 12 an weitere Innenballaste 6 oder ähnliches weitergegeben wird.

Die Roll-Elemente 13, die vorliegend an drei Stellen in Längsrichtung des Ballast-Körpers 9 in Gruppen von fünf um den Umfang des Ballast-Körpers angeordnet sind, erlauben eine Bewegung des Ballast-Körpers 9 (und damit des Innenballastes 6 insgesamt) zumindest in Längsrichtung eines Rohrstrangs (nicht dargestellt). Vorzugweise weisen die Roll-Elemente 13 Kugelrollen auf, die auch eine Querbewegung entlang der Innenwand des Rohrstrangs erlauben. Im vorliegenden Ausführungsbeispiel sind die Kugelrollen mit Kugeln aus Stahl versehen, soweit die Anforderungen an den Rohrstrang es beispielsweise nicht erforderlich machen, Polyamid (insb. Nylon) vorzusehen, mit dem im Allgemeinen ein noch besserer Schutz gegen eine Beschädigung beim Abrollen an der Innenwand des Rohrstrangs erreicht werden kann.

Mit dem Vorsehen von fünf Roll-Elementen 13 entsprechender Größe wird zumindest im Beispiel eines Rohrs DN250 erreicht, dass in jeder Lage des Innenballast 6 der Ballast-Körper 9 über wenigstens drei der fünf Roll-Element 13 gegenüber der Innenwand des Rohrstrangs abgestützt ist. In anderen Ausführungen können auch andere Zahlen von Roll-Elementen verwendet werden.

Die Anordnung von drei Gruppen, die in Längsrichtung gegeneinander versetzt sind, dient ebenfalls dazu, eine Abstützung des Ballast-Körpers 9 über die Roll-Elemente 13 sicherzustellen.

Im vorliegenden Ausführungsbeispiel sind die Roll-Elemente 13 in Gruppen angeordnet, wobei einander entsprechende Roll-Elemente 13 jeweils an gleichen Umfangspositionen angeordnet sind. Eine derartige Anordnung ist nicht wesentlich. So können die Umfangspositionen zwischen Gruppen ohne weiteres unterschiedlich sein. Auch eine Anordnung in Gruppen ist nicht notwendig. Im Fall von Gruppen ist es zudem möglich, dass verschiedene Gruppen unterschiedliche Anzahlen von Roll-Elementen 13 aufweisen. Auch wenn eine einheitliche Ausgestaltung der Roll-Elemente 13 vorteilhaft ist, können auch unterschiedlich ausgestaltete Roll-Elemente 13 miteinander kombiniert werden.

Infolge der Ausgestaltung, hier als Stahlelement, hat der Innenballast eine derartige längenbezogene Masse, dass ein mit dem Innenballast (bzw. einer Kette von Innenballasten) versehenen Rohrstrang hinsichtlich seines Auftriebs in einem flüssigen Verfüllbaustoff kompensiert wird, d.h. ein eventuell noch verbleibender Rest-Auftrieb ist so gering, dass der Rohrstrang lagestabil bleibt.

Die konkrete Ausgestaltung des Ballast-Körpers 9 ist im Wesentlichen frei wählbar, solange eine gewünschte längenbezogene Masse gewährleistet ist. Beispielsweise kann anstelle eines zylindrischen Ballast-Körpers 9 ein Ballast-Körper in Form eines Stahl-Trägers (z.B. mit H-Profil) verwendet werden. Es ist nicht notwendig, dass der Ballast-Körpers in sich homogen ist, d.h. der Ballast-Körper kann aus verschiedenen Materialien hergestellt sein. Es ist auch nicht notwendig, dass der Ballast-Körper eine in Längsrichtung gleichbleibende längenbezogene Masse aufweist. Vorteilhafterweise ist der Innenballast 6 deutlich kürzer als ein Rohr(segment), so deshalb, um auch eine gewisse Kurvenführung (in der Ebene und/oder in Oben-/Unten-R zu erlauben, so dass selbst bei einer Ungleichverteilung der Masse im Innenballast 6 in seiner Längsrichtung im Ergebnis eine ausreichend gleichmäßige Gewichtseinbringung auf den Rohrstrang gewährleistet ist, der dann in seiner Gänze langestabil bleibt ohne aufzutreiben.

In Bau-Richtung vor dem Innenballast 6 ist eine separate Bremse 15 vorgesehen, die allerdings kürzer ist als ein Innenballast 6 und dementsprechend nur zwei Gruppen von Roll-Elementen 13 aufweist. Entsprechend zum Innenballast 6 weist die Bremse 15 eine Zug-Verbindung 11 und eine Zieh-Verbindung 12 auf.

Die Bremse 15 dient insbesondere dazu, die Kette von Innenballasten 6 im Fall einer abfallenden Verlegung des Rohrstrangs dagegen zu sichern, in Baurichtung aus dem Rohrstrang herauszulaufen. Anstelle einer Bremse wäre es möglich, ein Seil oder eine Kette auf der gegenüberliegenden Seite der Innenballastierung vorzusehen, das bzw. die etwa in der Startbaugrube gehalten würde. Neben dem Materialaufwand ist damit allerdings auch ein logistischer Aufwand verbunden, da eine derartige Rückhaltekette oder ein Rückhalteseil bei einer Vorwärtsbewegung der Innenballastierung nach Verbinden eines weiteren Rohres mit dem Rohrstrang entsprechend nachgelassen werden müsste.

Im vorliegenden Ausführungsbeispiel ist die Bremse 15 so ausgestaltet, dass die Bremswirkung eintritt, soweit die Zug-Verbindung 11 der Bremse keine Zugkraft erfährt, wobei die Bremswirkung aufgehoben wird, wenn eine ausreichende Zugkraft eingebracht wird. Anstelle einer derartigen, konstruktiv erreichten automatischen Bremsung und Freigabe ist es auch möglich, eine per Steuerbefehl ansteuerbare Bremse vorzusehen.

Die obige Diskussion zu den Roll-Elementen 13 des Innenballast 6 gilt entsprechend auch für die Roll-Elemente 13 der Bremse 15.

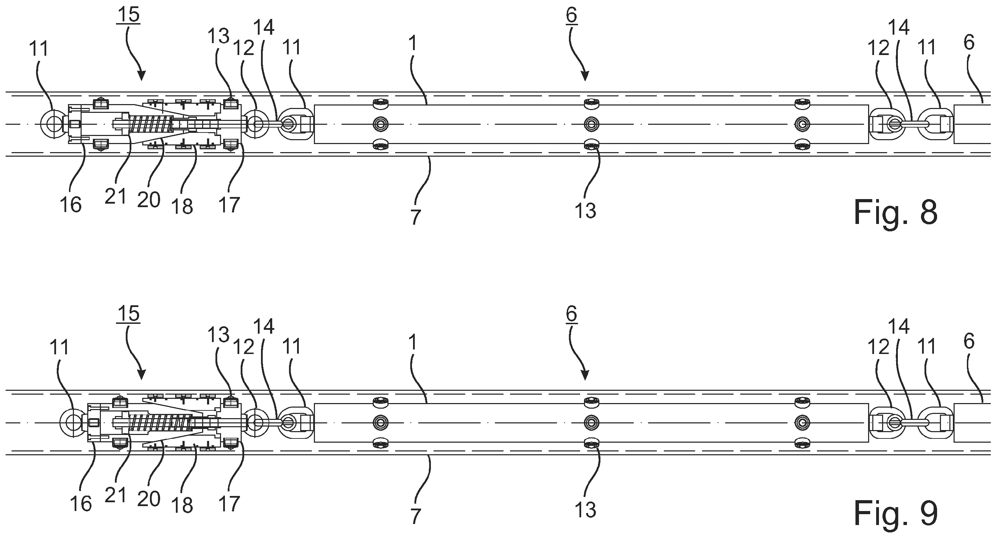

Fig. 8 zeigt eine schematische Schnitt-Darstellung eines Ausführungsbeispiels eines Innenballastes mit einer geöffneten Bremse und Fig. 9 zeigt eine schematische Schnitt-Darstellung eines Ausführungsbeispiels eines Innenballastes mit einer geschlossenen Bremse.

Die Schnitt-Darstellungen von Fig.8 und 9 (wobei nur die Bremse 15 im Querschnitt gezeigt ist), entsprechen in der Anordnung der Darstellung aus Fig. 7, so dass in dieser Hinsicht auf eine Wiederholung einer Diskussion der Elemente des Innenballasts 6 und der äußeren Elemente der Bremse 14 verzichtet werden kann.

Die Bremse 15 umfasst ein Vorderelement 16 und ein Hinterelement 17, sowie in Längsrichtung zwischen dem Vorderelement 16 und dem Hinterelement 17 (genauer zwischen Teilen dieser Elemente) angeordnete Bremssegmente 18.

Das Vorderelement 16 weist eine Bohrung auf, durch die sich ein Schaft des Hinterelements 17 erstreckt, so dass das Vorderelement 16 und das Hinterelement 17 über eine Federeinrichtung 19 miteinander so gekoppelt sind, dass die Federeinrichtung 19, sofern von außen keine Kraft einwirkt, das Hinterelement 17 (bzw. genauer dessen Schaft) in Richtung des Vorderelements 16 zieht, wie dies in Fig. 9 illustriert ist.

Sofern eine Zugkraft am Vorderelement 16 angreift, wird diese über die Federeinrichtung 19 auf das Hinterelement 17 übertragen (und von der weiter an die Innenballaste 6 weitergegeben), wobei die Federeinrichtung 19 zusammengedrückt wird, was damit verbunden ist, dass sich das Vorderelement 16 und das Hinterelement 17 gegeneinander in Längsrichtung bewegen, wie dies im Vergleich zu Fig. 9 in Fig. 8 illustriert ist.

Zwischen Außenbereichen von Vorderelement 16 und Hinterelement 17 sind die Bremssegmente 18 angeordnet, wobei eine Schräge 20 (also ein Konus) am Vorderelement 16 mit den Bremssegmenten 18 in Kontakt seht. Wird, wie in Fig. 8 gezeigt, die Federeinrichtung 19 komprimiert, sind die Bremssegmente 18 am inneren Bereich der Schräge 20 angeordnet (da zwischen dem Vorderelement 16 und dem Hinterelement 17 entsprechend viel Platz vorhanden ist), so dass die Bremssegmente 18 von der Innenwandung des Rohrstrangs 7 beabstandet sind und insofern keine Bremswirkung vorliegt.

Wird allerdings - wie in Fig. 9 gezeigt - der Schaft des Hinterelements 17 durch die Federeinrichtung 19 in das Vorderelement 16 hineingezogen, werden die Bremssegmente 18 entlang der Schräge 20 nach außen bewegt, bis sie an der Innenwandung des Rohrstrangs anliegen, so dass die Bremse 15 damit bremst.

Mit einem Zug am Vorderelement 16 wird die über die Schräge 20 auf die Bremssegmente 19 wirkende und nach außen gerichtete Kraft verringert bzw. aufgehoben, so dass damit auch die Bremswirkung aufgehoben wird.

Um eine relative Bewegung von Vorderelement 16 und Hinterelement 17 zu beschränken, weist die Bremse einen Anschlag 21 auf. Dieser Anschlag 21 erlaubt insbesondere im vorliegenden Ausführungsbeispiel, das Zusammenpressen der Federeinrichtung 19 zu beschränken, um diese Federeinrichtung 19 keinen übermäßigen Belastungen auszusetzen.

Sofern sich die Bremssegmente 18 zwischen dem Vorderelement 16 und dem Hinterelement 17 in radialer Richtung frei bewegen können (soweit dies räumlich möglich ist), kann ein nach unten orientiertes Bremssegment 18 infolge der Schwerkraft auf der Innenwandung des Rohrstrangs 7 zu liegen kommen. Wenn eine damit verbundene Bremswirkung ausreichend klein ist (d.h. das Gewicht des Bremssegments 18 ausreichend kleiner ist als eine beim Bremsen eingebrachte Kraft) und soweit hiermit keine Beschädigungen an der Innenwand verursacht werden, sind keine Maßnahme zu dessen Verhinderung nötig. Es kann allerdings auch vorgesehen sein, dass die Bremssegmente 18 mit angemessen dimensionierten Federelementen (nicht dargestellt) versehen sind, die die Bremssegmente 18 nach innen und damit von der Innenwandung des Rohrstrangs wegziehen.

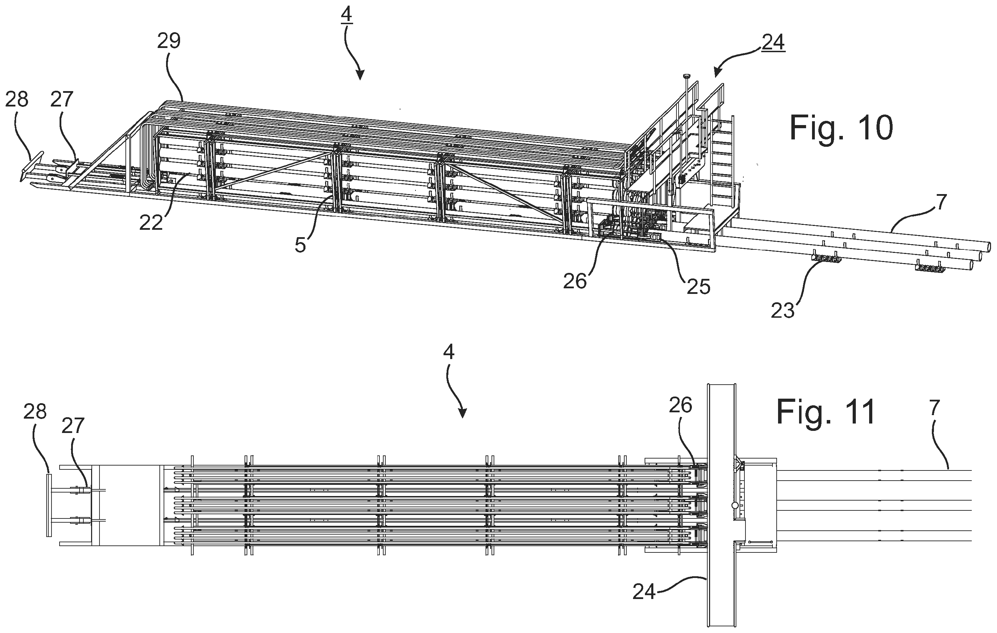

Fig. 10 zeigt eine schematische, perspektivische Gesamtansicht eines Ausführungsbeispiels einer Rohrinstallationsvorrichtung. Fig. 11 zeigt eine schematische Draufsicht auf die Rohrinstallationsvorrichtung aus Fig. 10.

Die Rohrinstallationsvorrichtung 4 ist mit einem Rohrmagazin 5 versehen und befindet sich in Baurichtung vor den bereits liegenden (aber noch nicht eingebetteten) Rohrsträngen 7.

Wie bereits oben diskutiert sind im vorliegenden Ausführungsbeispiel drei parallele Rohrstränge 7 vorgesehen, so dass auch das Rohrmagazin 5 dazu ausgestaltet ist, nebeneinander 3 Rohre 22 (die auch als Rohrsegmente 22 bezeichnet werden können) aufzunehmen. Hierbei sind jeweils vier Rohre 22 übereinander im Rohrmagazin 5 vorgesehen.

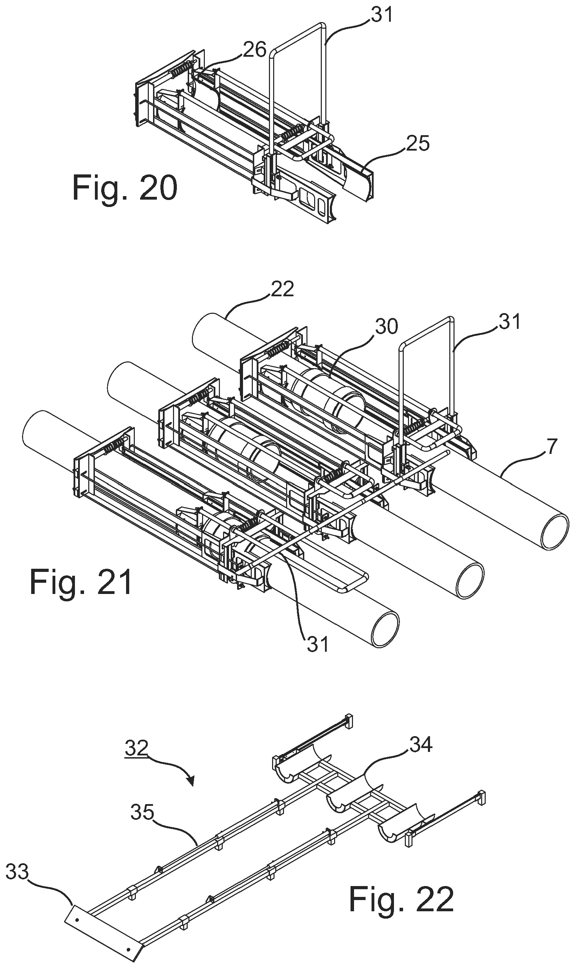

Die Rohrstränge 7 sind jeweils in einem vorbestimmten Abstand mit Rohrauflagern 23 abgestützt, auf denen die Rohre 22 jeweils auch vor dem Verbinden im Rohrmagazin 5 vorgesehen sind. Die Rohrauflager werden weiter unten unter Bezug auf die Fig. 22 bis 25 besprochen.

Die Rohrinstallationsvorrichtung 4 umfasst im Bereich der herzustellenden Verbindung zwischen den Rohren 22 und den Rohrsträngen 7 eine Arbeitsbühne 24, wobei dort eine Führungseinheit 25 vorgesehen ist, die jeweils die bereits liegenden Rohrstränge 7 kontaktiert, so dass die Enden der Rohrstränge 7 und die Rohrinstallationsvorrichtung 4 zueinander ausgerichtet sind.

Im Bereich der Arbeitsbühne befinden sich auch Klemmeinrichtungen 26, die jeweils ein Rohr 22 klemmend halten können.

Auf der Seite der Rohrinstallationsvorrichtung 4 in Baurichtung weist diese zudem eine Schubeinrichtung 27 auf, mit der auf die mit den Rohrsträngen 7 zu verbindenden Rohre eine Schubkraft ausgeübt werden kann.

Weiter in Baurichtung weist die Rohrinstallationsvorrichtung 4 einen Angriffsabschnitt 28, an dem beispielsweise ein Bagger (nicht gezeigt, siehe aber Fig. 6) angreifen kann, um die Rohrinstallationsvorrichtung 4 weiter in Baurichtung zu ziehen.

Das Rohrmagazin 4 weist neben den Aufnahmen für die Rohre 22 auf den jeweiligen Rohrauflagern 23 ferner Zugseilrohre 29 auf, namentlich je vier Zugseilrohre 29 in drei Gruppen entsprechend der Anzahl der Rohre 22 im Rohrmagazin. In den Zugseilrohren 29 ist jeweils ein Zugseil (nicht dargestellt) vorgesehen, das, wenn die jeweiligen Rohre 22 einer Dreiergruppe zur Verbindung mit dem jeweiligen Rohrstrang 7 bereitgestellt sind, durch eines der Rohre 22 durchgeführt wird, um mit der an Ende des Rohrstrangs 7 vorliegenden Innenballastierung (nicht dargestellt) verbunden zu werden. Wenn die Rohrinstallationsvorrichtung 4 nach Verbinden der Rohre 22 mit den Rohrsträngen 7 vorgezogen wird, ist das Zugseil mit der Rohrinstallationsvorrichtung 4 so verbunden, dass darüber auch die jeweilige Innenballastierung in das soeben verbundene Rohr am Rohrstrang 7 gezogen wird, so dass also damit das Zugseil aus dem Rohr wieder herausgezogen wird,

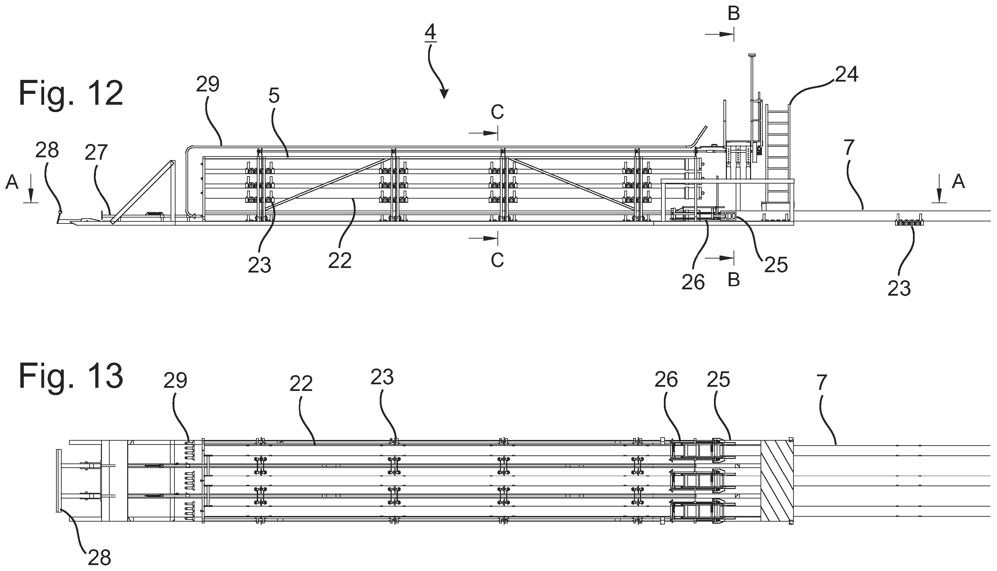

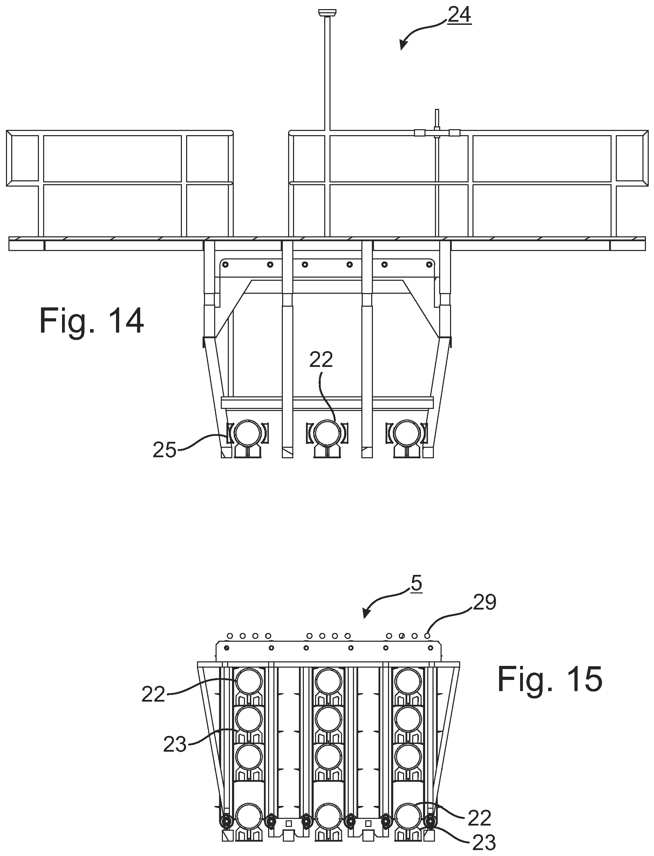

Fig. 12 zeigt eine schematische Seitenansicht der Rohrinstallationsvorrichtung aus Fig. 10 und 11. Fig. 13 zeigt eine Schnittansicht der Rohrinstallationsvorrichtung entlang der Linie A-A aus Fig. 12. Fig. 14 zeigt eine Schnittansicht der Rohrinstallationsvorrichtung entlang der Linie B-B aus Fig. 12. Fig. 15 zeigt eine Schnittansicht der Rohrinstallationsvorrichtung entlang der Linie C-C aus Fig. 12.

In Fig. 15 ist erkennbar, dass die unteren Rohre 22 mit ihren entsprechenden Rohrauflagern 23 aus dem Rohrmagazin 5 auf den Boden des Rohrgrabens abgesetzt sind und dort zur Verbindung mit den Rohrsträngen bereitstehen.

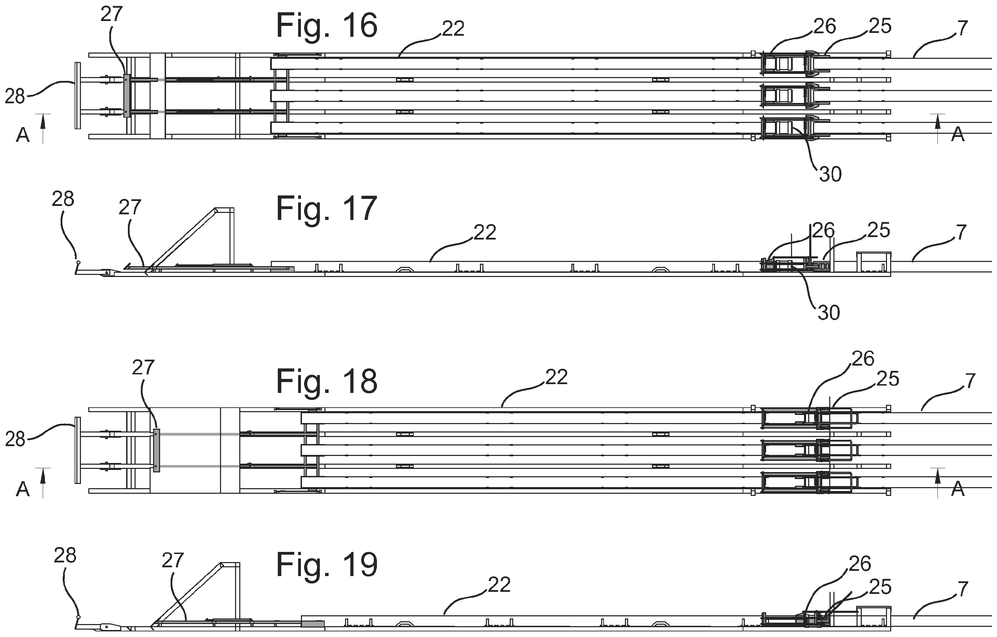

Fig. 16 zeigt eine schematische Darstellung eines Ausführungsbeispiels eines Stecksystems einer Rohrinstallationsvorrichtung. Fig. 17 zeigt eine Schnittansicht des Stecksystems entlang der Linie A-A aus Fig. 16.

Das Stecksystem der Rohrinstallationsvorrichtung 4 ist der Teil, der konkret mit dem Ausrichten und eigentlichen Verbinden der Rohre 22 mit den Rohrsträngen 7 befasst ist. Im Bereich des Endes der Rohrstränge 7 sind einerseits Führungseinheiten 25 vorgesehen, mit denen die Enden der Rohrstränge 7 gegriffen (geklemmt) werden, so dass diese Enden in einer definitiven Position hinsichtlich der Rohrinstallationsvorrichtung 4 sind.

Benachbart zu den Führungseinheiten 25 befinden sich jeweilige Klemmeinrichtungen 26, die jeweils ein Rohr 22 klemmend halten und die gegenüber den Führungseinheiten 25 in Längsrichtung beweglich angeordnet sind. Die Klemmeinrichtungen 26 und Führungseinheiten 25 werden im Folgenden unter Bezug auf die Figuren 20 und 21 näher besprochen.

Auf der gegenüberliegenden Seite der Rohrinstallationsvorrichtung 4 sind die Rohre 22 jeweils in einer Schubeinrichtung 27 aufgenommen, die ihrerseits wiederum in Längsrichtung relativ zum Rohrinstallationsvorrichtung 4 als Ganzes beweglich ausgestaltet ist. Die Schubeinrichtung wird weiter unten unter Bezug auf Fig. 22 näher diskutiert.

In der Darstellung der Figuren 15 und 16 sind die Rohre 22 jeweils an ihrem den Rohrsträngen zugewandten Seite mit Aufsteckmuffen 30 versehen und werden durch die Klemmeinrichtungen 26 jeweils gehalten, stehen also dafür bereit, zunächst über die Klemmeinrichtungen 26 in die Nähe der Enden der Rohrstränge 7 gezogen zu werden. Hierbei kann bereits vorgesehen sein, dass damit die Enden der Rohrstränge 7 in die Aufsteckmuffen 30 eingeführt werden, oder auch, dass sich die Aufsteckmuffen 30 gerade noch nicht um die Enden der Rohrstränge erstrecken.

Fig. 18 zeigt eine andere schematische Darstellung des Ausführungsbeispiels eines Stecksystems einer Rohrinstallationsvorrichtung aus Fig. 16. Fig. 19 zeigt eine Schnittansicht des Stecksystems entlang der Linie A-A aus Fig. 18.

Die Fig. 18 und 19 entsprechen den Fig. 16 und 17, wobei allerdings die Rohre 22 unter Nutzung der Schubeinrichtung 27 auf die Rohrstränge 7 soweit zugeschoben wurden, dass eine gewünschte Verbindung (also Einstecktiefe) für die Aufsteckmuffen 30 sichergestellt ist.

Fig. 20 zeigt eine schematische Darstellung eines Ausführungsbeispiels einer Klemmvorrichtung. Die Klemmvorrichtung umfasst hier einerseits die Klemmeinrichtung 26 und die Führungseinheit 25, die gemeinsam über eine Hebel 31 bedient werden können, so dass sich jeweilige Wangen an die Außenseite des Rohres bzw. Rohrstranges legen.

Fig. 21 zeigt schematische Darstellungen von Klemmvorrichtungen entsprechend der Darstellung von Fig. 20. Die Darstellungen in Fig. 21 zeigen, wie die Fig. 20 jeweils eine Klemmvorrichtung mit einer Klemmeinrichtung 26 und einer Führungseinheit 25, wobei hier zudem auch ein jeweiliges Rohr 22 und ein Rohrstrang 7 gezeigt sind.

Die Darstellung oben rechts von Fig. 21 entspricht der Situation aus Fig. 20, wobei hier ein Rohr 22 mit einer aufgesteckten Aufsteckmuffe 30 und ein Rohrstrang 7 gezeigt sind.

In der Situation, die in Fig. 21 in der Mitte gezeigt ist, ist der Hebel 31 umgelegt, so dass die Klemmeinrichtung 26 das Rohr 22 einklemmt und die Führungseinheit 25 das Ende des Rohrstrangs 7 ergreift.

Im Fall der Darstellung links unten von Fig. 21 ist das von der Klemmeinrichtung 26 geklemmte, also gehaltene Rohr 22 zum Rohrstrang 7 gezogen, so dass sich die Aufsteckmuffe 30 gerade über das Ende des Rohrstrangs 7 erstreckt.

Während das Ziehen der Rohre 22 jeweils mit Körperkraft, vorzugsweise aber auch mit mechanischer Unterstützung leisten lässt, ist für das finale Einstecken der Rohre 22 über die Aufsteckmuffen 30 mit den Rohrsträngen 7 eine Betätigung durch einen Hydraulikbagger vorgesehen.

Fig. 22 zeigt eine schematische, perspektivische Darstellung eines Ausführungsbeispiels einer Drückstütze. Die Drückstütze 32 ist Teil der Schubeinrichtung 27 und umfasst eine Schubaufnahme 33 sowie damit gekoppelte Rohraufnahmen 34. Zwischen den Rohraufnahmen 34 und der Schubaufnahme 33 ist eine Federung 35 vorgesehen, mit der es möglich ist, die Schubaufnahme nach Wegnahme der Drückkraft wieder in die Ausgangsstellung zurück zu bewegen. Ein Anschlagblech in der Drückstütze verhindert eine zu große Schubeinwirkung auf die Rohre 22.

Die Schubaufnahme 33 dient als Angriffspunkt für den Bagger.

Die Rohraufnahmen 34 umfassen jeweils einerseits eine halbzylinderförmige Aufnahmefläche und andererseits eine stirnseitige Anlagefläche, die an der Stirnseite der Rohrwandung anliegt und über die eine Schubkraft auf das Rohr (hier nicht gezeigt) ausgeübt werden kann.

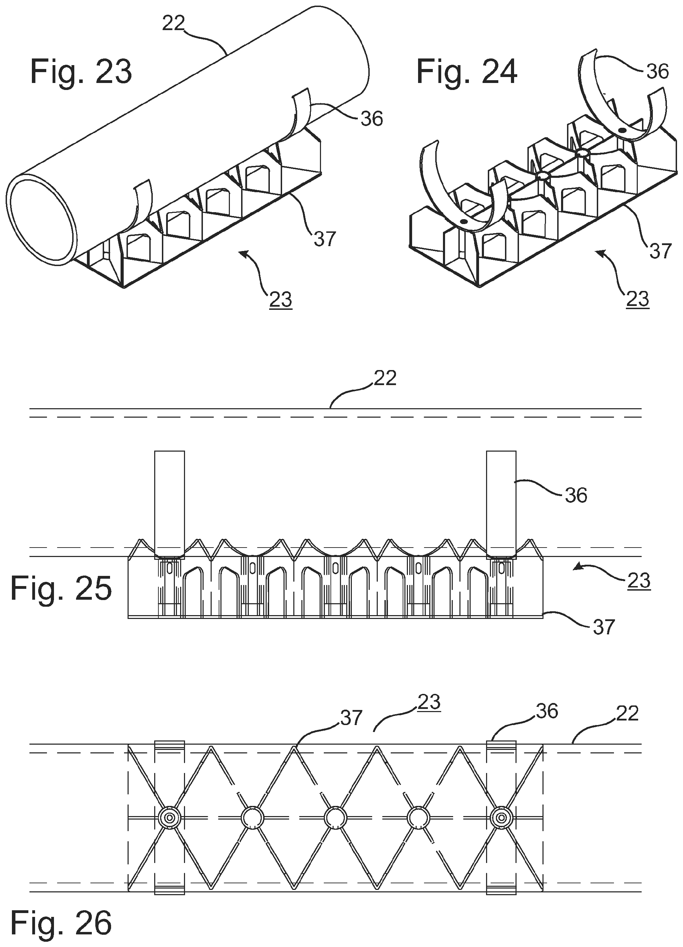

Fig. 23 zeigt eine schematische Darstellung eines Ausführungsbeispiels eines Rohrauflagers mit aufgenommenem Rohr. Das Rohrauflager 23 umfasst (hier zwei) Bügel 36, die das Rohr 22 teilweise umgreifen und dabei an der Außenwand des Rohrs 22 anliegen. Bei einer Ausgestaltung der Bügel 36 mit einer ausreichenden Elastizität kann das Rohr 22 durch die Öffnung der Bügel 36 in die Bügel 36 eingeführt werden. Ansonsten kann das Rohr 22 auch in Längsrichtung in die Bügel eingeführt werden.

Die Bügel 36 sind an einer Basis 37 des Rohrauflagers 23 angebracht, die aus miteinander verstrebten aber in sich durchbrochenen Elementen gebildet ist, die einerseits eine ausreichende Tragfähigkeit für den Rohrstrang mitsamt darin befindlicher Innenballastierung leisten und andererseits dem Füllbaustoff erlauben, den Bereich unterhalb des Rohrstrangs in gewünschter Weise auszufüllen.

Fig. 24 zeigt eine schematische Darstellung des Rohrauflagers aus Fig. 23 ohne Rohr. Fig. 25 zeigt eine schematische Darstellung des Rohrauflagers aus Fig. 22 in Seitenansicht. Fig. 26 zeigt eine schematische Darstellung des Rohrauflagers aus Fig. 22 in Draufsicht,

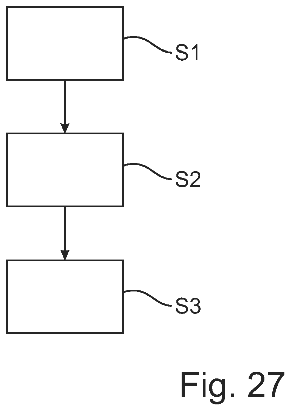

Fig. 27 zeigt ein schematisches Ablaufdiagramm eines Ausführungsbeispiels eines erfindungsgemäßen Verfahrens zum Einbau eines oder mehrerer Rohrstränge in einem Boden, insbesondere unter Verwendung von zeitweise fließfähigem, selbst verdichtendem Verfüllbaustoff.

Das Verfahren umfasst dabei mit Schritt S1 ein Bereitstellen mehrerer Rohre, mit Schritt S2 ein Verbinden einzelner Rohre zur Bildung des einen oder der mehreren Rohrstränge, und mit Schritt S3 ein Einbauen des einen oder der mehreren Rohrstränge im Boden, insbesondere durch Einbetten des Rohrstrangs oder der Rohrstränge in zeitweise fließfähigen, selbst verdichtenden Verfüllbaustoff.

In Schritte S1 oder S2 werden beim Bereitstellen und/oder Verbinden in die Rohre Innenballaste eingebracht, jeweils mit einem vorzugweise zylinderförmigen Ballast-Körper und einer Bewegungseinheit, die für eine Beweglichkeit des Ballast-Körpers zumindest in Längsrichtung des Rohrstrangs ausgestaltet ist.

Hierbei ist eine längenbezogene Masse des jeweiligen Innenballasts auf Grundlage eines bei einem Einbau des Rohrstrangs auftretenden und zu kompensierenden längenbezogenen Auftriebs des Rohrstrangs bestimmt.

Mehrere Innenballaste werden mittels ihrer Bewegungseinheiten durch den Rohrstrang bzw. die Rohrstränge bewegt, wobei die Innenballaste aus einem Abschnitt des Rohrstrangs bzw. aus Abschnitten der Rohrstränge durch die Bewegung entfernt werden, für den bzw. die eine Auftriebskompensation nicht mehr benötigt wird oder der bzw. die keinen Auftrieb mehr erfahren.

### Bezugszeichenliste

- 1: Rohrgraben
- 2: Startbaugrube
- 3: Aushub
- 4: Rohrinstallationsvorrichtung
- 5: Rohrmagazin
- 6: Innenballast
- 7: Rohrstrang
- 8: Verfüllbaustoff
- 9: Ballast-Körper
- 10: Bewegungseinheit
- 11: Zug-Verbindung
- 12: Zieh-Verbindung
- 13: Roll-Element
- 14: Schäkel
- 15: Bremse
- 16: Vorderelement
- 17: Hinterelement
- 18: Bremssegment
- 19: Federeinrichtung
- 20: Schräge
- 21: Anschlag
- 22: Rohr
- 23: Rohrauflager
- 24: Arbeitsbühne
- 25: Führungseinheit
- 26: Klemmeinrichtung
- 27: Schubeinrichtung
- 28: Angriffsabschnitt
- 29: Zugseilrohr
- 30: Aufsteckmuffe
- 31: Hebel
- 32: Druckstütze
- 33: Schubaufnahme
- 34: Rohraufnahme
- 35: Federung
- 36: Bügel
- 37: Basis
- S1: Bereitstellen
- S2: Verbinden
- S3: Einbauen

## Patentansprüche

1. Verfahren zum Einbau eines oder mehrerer Rohrstränge in einem Boden, insbesondere unter Verwendung von zeitweise fließfähigem, selbst verdichtendem Verfüllbaustoff, mit den Schritten:
Bereitstellen mehrerer Rohre,
Verbinden einzelner Rohre zur Bildung des einen oder der mehreren Rohrstränge, und
Einbauen des einen oder der mehreren Rohrstränge im Boden, insbesondere durch Einbetten des Rohrstrangs oder der Rohrstränge in zeitweise fließfähigen, selbst verdichtenden Verfüllbaustoff,
wobei beim Bereitstellen und/oder Verbinden in die Rohre Innenballaste eingebracht werden, jeweils mit:
- einem vorzugweise zylinderförmigen Ballast-Körper und
- einer Bewegungseinheit, die für eine Beweglichkeit des Ballast-Körpers zumindest in Längsrichtung des Rohrstrangs ausgestaltet ist,
wobei eine längenbezogene Masse des jeweiligen Innenballasts auf Grundlage eines bei einem Einbau des Rohrstrangs auftretenden und zu kompensierenden längenbezogenen Auftriebs des Rohrstrangs bestimmt ist,
wobei mehrere Innenballaste mittels ihrer Bewegungseinheiten durch den Rohrstrang bzw. die Rohrstränge bewegt werden,
wobei die Innenballaste aus einem Abschnitt des Rohrstrangs bzw. aus Abschnitten der Rohrstränge durch die Bewegung entfernt werden, für den bzw. die eine Auftriebskompensation nicht mehr benötigt wird oder der bzw. die keinen Auftrieb mehr erfahren.

2. Verfahren nach Anspruch 1,
wobei die Bewegungseinheit eines Innenballastes jeweils
- eine mit dem Ballast-Körper verbundene Zug-Verbindung, die zur Aufnahme einer Zugkraft für eine Bewegung des Ballast-Körpers durch den Rohrstrang ausgestaltet ist, und
- eine mit dem Ballast-Körper verbundene Zieh-Verbindung, die zur Weitergabe einer Zugkraft an einen weiteren Innenballast ausgestaltet ist, und
- Roll-Elemente umfasst, die für eine Beweglichkeit des Ballast-Körpers zumindest in Längsrichtung des Rohrstrangs ausgestaltet sind,
wobei mehrere Innenballaste durch ihre Zug- bzw. Zieh-Verbindungen miteinander verbunden werden und die verbundenen Innenballaste unter Abrollen auf den Roll-Elementen beim Einbringen der Innenballaste und/oder bei einem Entfernen der Innenballaste durch den Rohrstrang bzw. die Rohrstränge bewegt werden.

3. Verfahren nach Anspruch 2,
wobei ein Rohr an einem in einer Baurichtung befindlichen Ende eines gebildeten Rohrstranges mit dem Rohrstrang verbunden wird, wobei an dem gegenüberliegenden Ende des Rohrstranges wenigstens ein Innenballast eingebracht und mit einem bereits im Rohrstrang befindlichen Innenballast verbunden wird, und/oder,
wobei die im Rohrstrang befindlichen Innenballaste durch eine Zugvorrichtung, insbesondere unter Verwendung eines Zugseils oder einer Zugkette, in das mit dem Rohrstrang verbundene Rohr gezogen werden, und/oder
wobei wenigstens ein Innenballast an einem in einer Baurichtung befindlichen Ende eines gebildeten Rohrstranges mit einem bereits im Rohrstrang befindlichen Innenballast verbunden wird, wobei sich der wenigstens eine Innenballast in einem zu verbindenden Rohr befindet und/oder das zu verbindende Rohr den wenigstens einen Innenballast beim Verbinden mit dem Rohrstrang aufnimmt.

4. Verfahren nach einem der vorstehenden Ansprüche,
wobei die Bewegungseinheit eine Antriebseinheit zum Bewegen des Ballast-Körpers umfasst.

5. Verfahren nach einem der vorstehenden Ansprüche,
wobei das Verbinden einzelner Rohre mit dem Rohrstrang unter Nutzung einer Rohrinstallationsvorrichtung durchgeführt wird, die mittels einem insbesondere austauschbaren Rohrmagazin, das jeweils mehrere Rohre vorhält, ausgestattet ist.

6. Verfahren nach Anspruch 5,
wobei die Rohrinstallationsvorrichtung nach Verbinden eines oder mehrerer Rohre mit einem Rohrstrang oder mehrerer Rohrstränge in einer Baurichtung von dem Rohrstrang oder den Rohrsträngen wegbewegt wird, wobei dabei insbesondere mittels der Rohrinstallationsvorrichtung die in dem Rohrstrang oder in den Rohrsträngen befindlichen Innenballaste durch den Rohrstrang bzw. die Rohrstränge bewegt werden, und/oder
wobei die Rohre zur Verbindung mittels Steckmuffen ausgestaltet sind,
wobei die Rohrinstallationsvorrichtung ein jeweiliges Rohr hält und relativ zum Rohrstrang verschiebt, um die Steckmuffenverbindung herzustellen.

7. Innenballast für einen einzubauenden Rohrstrang, insbesondere für einen in zeitweise fließfähigem, selbst verdichtendem Verfüllbaustoff einzubettenden Rohrstrang, mit
einem vorzugweise zylinderförmigen Ballast-Körper und
einer Bewegungseinheit, die für eine Beweglichkeit des Ballast-Körpers zumindest in Längsrichtung des Rohrstrangs ausgestaltet ist,
wobei eine längenbezogene Masse des Innenballasts auf Grundlage eines bei einem Einbau des Rohrstrangs auftretenden und zu kompensierenden längenbezogenen Auftriebs des Rohrstrangs bestimmt ist.

8. Innenballast nach Anspruch 7,
wobei die Bewegungseinheit
- eine mit dem Ballast-Körper verbundene Zug-Verbindung, die zur Aufnahme einer Zugkraft für eine Bewegung des Ballast-Körpers durch den Rohrstrang ausgestaltet ist, eine mit dem Ballast-Körper verbundene Zieh-Verbindung, die zur Weitergabe einer Zugkraft an einen weiteren Innenballast ausgestaltet ist, und Roll-Elemente, die für eine Beweglichkeit des Ballast-Körpers zumindest in Längsrichtung des Rohrstrangs ausgestaltet sind, und/oder
- eine Antriebseinheit zum Bewegen des Ballast-Körpers umfasst; und/oder
die Bewegungseinheit Roll-Elemente umfasst, die für eine Beweglichkeit des Ballast-Körpers zumindest in Längsrichtung des Rohrstrangs ausgestaltet sind,
wobei
die Roll-Elemente Kugelrollen aufweisen und/oder
zur Kontaktierung mit dem Rohrstrang vorgesehene Abschnitte der Roll-Elemente Polyamid, insbesondere Nylon, Stahl oder eine Kombination davon aufweisen oder daraus bestehen und/oder
mehrere, insbesondere wenigstens fünf, Roll-Elemente an einander in Längsrichtung des Ballast-Körpers entsprechenden Stellen des Ballast-Körpers außen am Ballast-Körpers angeordnet sind, vorzugweise mit gleichen Intervallen, und/oder
die Roll-Elemente am Ballast-Körper in Längsrichtung so angeordnet sind, dass für einen Innendurchmesser des Rohrstrangs innerhalb eines vorbestimmten Bereichs bei jeder Lage des Ballast-Körpers wenigstens drei Roll-Elemente für eine Kontaktierung mit einer Innenfläche des Rohrstrangs vorgesehen sind, und/oder
wobei die Zug-Verbindung und/oder die Zieh-Verbindung jeweils eine Öse, insbesondere eine Wirbelöse, aufweist und/oder mit einem Schäkel versehen ist.

9. Innenballast nach einem der Ansprüche 7 oder 8, ferner mit,
einer Bremse, die vorzugweise zur Einwirkung auf eine Innenfläche des Rohrstrangs vorgesehen ist und/oder die vorzugsweise bei einer Zugentlastung eine Bremswirkung entfaltet.

10. Bremse für einen in einem Rohrstrang aufzunehmenden Innenballast, mit:
wenigstens einem Vorderelement und wenigstens einem Hinterelement, wobei das Vorderelement und das Hinterelement relativ zueinander in Längsrichtung der Bremse beweglich ausgestaltet sind,
mehreren radial beweglichen Bremssegmenten, die zwischen dem Vorderelement und dem Hinterelement angeordnet sind und die ausgestaltet sind, eine Innenseite des Rohrstrangs für eine Bremswirkung zu kontaktieren, und
einer das Vorderelement und das Hinterelement miteinander koppelnden Federeinrichtung, die gegen eine relative Auseinanderbewegung von Vorderelement und Hinterelement vorgespannt ist,
wobei das Vorderelement und/oder das Hinterelement eine Schräge aufweist, die zum Übertragen einer Relativbewegung zwischen Vorderelement und Hinterelement in Längsrichtung in eine radiale Bewegung der Bremssegmente ausgestaltet ist,
wobei die Bremse so ausgestaltet ist, dass
- wenn das Vorderelement eine externe Zugkraft erfährt, das Vorderelement und das Hinterelement gegen eine Wirkung der Federeinrichtung in Längsrichtung voneinander weg bewegt werden können, so dass den Bremssegmenten eine Radialbewegung nach innen ermöglicht wird, und
- wenn das Vorderelement keine externe Zugkraft erfährt, das Vorderelement und das Hinterelement durch die Federeinrichtung in Längsrichtung aufeinander zu bewegt werden können, so dass durch die Schräge eine Radialbewegung der Bremssegmente nach außen bewirkt wird.

11. Bremse nach Anspruch 10,:
wobei die Bremse Roll-Elemente aufweist, die für eine Beweglichkeit des Bremse zumindest in Längsrichtung des Rohrstrangs ausgestaltet sind, wobei insbesondere
die Roll-Elemente Kugelrollen aufweisen und/oder
zur Kontaktierung mit dem Rohrstrang vorgesehene Abschnitte der Roll-Elemente Polyamid, insbesondere Nylon, Stahl oder eine Kombination davon aufweisen oder daraus bestehen und/oder
mehrere, insbesondere wenigstens fünf, Roll-Elemente an einander in Längsrichtung der Bremse entsprechenden Stellen der Bremse außen an der Bremse angeordnet sind, vorzugweise mit gleichen Intervallen, und/oder
die Roll-Elemente an den Bremssegmenten vorgesehen sind, wobei die Roll-Elemente an den Bremssegmenten in radialer Richtung federnd gehalten sind, und/oder
die Bremse mit einem Anschlag zur Begrenzung der relativen Auseinanderbewegung von Vorderelement und Hinterelement versehen ist, und/oder
die Bremssegmente mit einem oder mehreren Federelementen versehen sind, die die Bremssegmente gegen eine nach außen gerichtete Radialbewegung vorspannen.

12. Rohrinstallationsvorrichtung zur parallelen Verbindung mehrerer Rohre mit parallelen Rohrsträngen mittels Steckmuffen, mit:
einer Haltevorrichtung, die dazu ausgestaltet ist, die mehreren Rohre parallel zueinander haltend aufzunehmen, und
einer Führungseinheit, die dazu ausgestaltet ist, mindestens einen der parallelen Rohrstränge zu kontaktieren,
wobei die Haltevorrichtung und die Führungseinheit miteinander gekoppelt sind, derart, dass von der Haltevorrichtung gehaltene Rohre in Längsrichtung jeweils mit den entsprechenden Rohrsträngen ausgerichtet sind, wenn die Führungseinheit den wenigstens einen Rohrstrang kontaktiert,
wobei die Rohrinstallationsvorrichtung dazu ausgestaltet ist, dass die von der Haltevorrichtung gehaltenen Rohre in Längsrichtung zu den jeweils entsprechenden Rohrsträngen bewegt und eine jeweilige Steckmuffenverbindung zwischen den Rohren und den jeweils vor den Rohren liegenden Rohsträngen hergestellt werden kann,
wobei die Führungseinheit dazu ausgestaltet ist, das Bewegen der Rohre und/oder das Herstellen der Steckmuffenverbindungen relativ zu den parallelen Rohrsträngen zu führen.

13. Rohrinstallationsvorrichtung nach Anspruch 12, wobei
die Haltevorrichtung mehrere Rohrhaltevorrichtungen umfasst, die jeweils dazu ausgestaltet sind, ein Rohr haltend aufzunehmen, und/oder
die Führungseinheit mehrere Rohrführungseinheiten umfasst, die jeweils dazu ausgestaltet sind, einen der parallel liegenden Rohrstränge zu kontaktieren; und/oder
die Haltevorrichtung
- eine Klemmeinrichtung, die dazu ausgestaltet ist, die mehreren Rohre klemmend zu halten, und
- eine Schubeinrichtung umfasst, die dazu ausgestaltet ist, auf die mehreren Rohre jeweilige Schubkräfte auszuüben,
wobei die Klemmeinrichtung ferner dazu ausgestaltet ist, die klemmenden gehaltenen Rohre in Längsrichtung zu den jeweils entsprechenden Rohrsträngen zu bewegen, und
die Schubeinrichtung dazu ausgestaltet ist, zum Herstellen der Steckmuffenverbindungen Schubkräfte auf die mehreren Rohre auszuüben, und/oder
die Führungseinheit für eine Bewegung in Längsrichtung relativ zum liegenden Rohrstrang und/oder relativ zur Haltevorrichtung beim Führen des Bewegens und/oder des Herstellens der Steckmuffenverbindungen ausgestaltet ist, und/oder:
die Rohrinstallationsvorrichtung eine Aufnahme für ein Rohrmagazin und/oder ein Rohrmagazin aufweist,
wobei das Rohrmagazin dazu ausgestaltet ist, in der Rohrinstallationsvorrichtung mehrere Rohre parallel zueinander der Klemmeinrichtung zuzuführen,
wobei das Rohrmagazin insbesondere ausgestaltet ist, in Führungen jeweils mindestens zwei Rohrauflager pro Rohr aufzunehmen, so dass ein jeweiliger Rohr auf den Rohrauflagern durch das Rohrmagazin nach unten abgelassen werden kann, und/oder:
die Rohrinstallationsvorrichtung eine Zugvorrichtung aufweist, die ausgestaltet ist, jeweiligen den mehreren Rohrsträngen befindlichen Innenballasten verbunden zu werden, insbesondere unter Verwendung eines Zugseils oder einer Zugkette,
wobei die Rohrinstallationsvorrichtung ausgestaltet ist, in Längsrichtung versetzt, insbesondere gezogen, zu werden, so dass mit dem Versetzen der Rohrinstallationsvorrichtung die Innenballaste in die mittels der Steckmuffenverbindungen mit den Rohrsträngen verbundenen Rohre gezogen werden.
